(19) Europäisches Patentamt
European Patent Office
Office européen des brevets

(11) **EP 3 491 417 B1**

(12) **EUROPÄISCHE PATENTSCHRIFT**

(45) Veröffentlichungstag und Bekanntmachung des Hinweises auf die Patenterteilung:
**20.04.2022 Patentblatt 2022/16**

(21) Anmeldenummer: **17729479.0**

(22) Anmeldetag: **13.06.2017**

(51) Internationale Patentklassifikation (IPC):
**G01S 17/06** (2006.01)   **G01S 17/42** (2006.01)
**G01S 17/93** (2020.01)   **G01S 7/48** (2006.01)

(52) Gemeinsame Patentklassifikation (CPC):
**G01S 17/06; G01S 7/4802; G01S 7/4808;
G01S 17/42; G01S 17/931**

(86) Internationale Anmeldenummer:
**PCT/EP2017/064405**

(87) Internationale Veröffentlichungsnummer:
**WO 2018/019466 (01.02.2018 Gazette 2018/05)**

(54) **VERFAHREN UND SYSTEM ZUM ERFASSEN VON LANDMARKEN IN EINEM VERKEHRSUMFELD EINER MOBILEN EINHEIT**

METHOD AND SYSTEM FOR DETECTING LANDMARKS IN A TRAFFIC ENVIRONMENT OF A MOBILE UNIT

PROCÉDÉ ET SYSTÈME DE DÉTECTION DE POINTS DE REPÈRE DANS UN ENVIRONNEMENT DE CIRCULATION D'UNE UNITÉ MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2016 DE 102016214027**

(43) Veröffentlichungstag der Anmeldung:
**05.06.2019 Patentblatt 2019/23**

(73) Patentinhaber: **Volkswagen Aktiengesellschaft
38440 Wolfsburg (DE)**

(72) Erfinder: **STESS, Marek
30952 Ronnenberg (DE)**

(56) Entgegenhaltungen:
**WO-A1-99/01843    DE-A1- 10 148 068**

- **FUERSTENBERG K ET AL: "Object tracking and classification using laserscanners pedestrian recognition in urban environment", INTELLIGENT TRANSPORTATION SYSTEMS, 2001. PROCEEDINGS. 2001 IEEE AUGUST 25-29, 2001, PISCATAWAY, NJ, USA,IEEE, 25. August 2001 (2001-08-25), Seiten 451-453, XP010555813, DOI: 10.1109/ITSC.2001.948699 ISBN: 978-0-7803-7194-1**

**Beschreibung**

Die vorliegende Erfindung betrifft ein Verfahren und ein System zum Erfassen von Landmarken in einem Verkehrsumfeld einer mobilen Einheit, insbesondere eines Fahrzeugs.

Für die zunehmende Integration automatischer Fahrfunktionen in modernen Fahrzeugen ist die genaue Lokalisierung des Fahrzeugs eine wichtige Voraussetzung. Dabei genügt es nicht, die Position des Fahrzeugs etwa auf einige Meter genau zu kennen, sondern es können bereits kleinere Abweichungen, etwa entlang der Breite einer Fahrspur, erhebliche Auswirkungen auf die Fahrt haben.

Um eine ausreichend genaue und zuverlässige Lokalisierung des Fahrzeugs zu ermöglichen, werden etwa Ansätze zur landmarkenbasierten Ortung verfolgt.

Die K. Fuerstenberg and V. Willhoeft: "Object tracking and classification using laserscanners pedestrian recognition in urban environment", 2001 IEEE INTELLIGENT TRANSPORTATION SYSTEMS CONFERENCE PROCEEDINGS; Oakland (CA), USA, 25 August 2001, S.451-453, und DE 101 48 068 A1 offenbaren zwei Verfahren zur Erkennung und Verfolgung von Objekten auf der Basis von einem Sensor, insbesondere einem Laserscanner.

In WO 99/01843 A1 wird die Anwendung von Hauptkomponentenanalysen bei Fernerkundungsdatenbearbeitung beschrieben.

Bei dem in der DE 10 2004 003 850 A1 beschriebenen Verfahren zur Erkennung von Markierungen auf einer Fahrbahn werden durch einen Laserscanner in zeitlicher Folge Abstandsbilder eines Erfassungsbereich erfasst und der Abstand einer erkannten Markierung wird geschätzt. Durch Erkennen von Geraden auf der Fahrbahn werden Markierungen identifiziert.

Die DE 10 2007 020 791 A1 schlägt eine Fahrspurmarkierungs-Erkennungsvorrichtung vor, bei der aus Daten eines Lidar-Instruments eine Mittellinie und eine Fahrbahnbreite extrahiert werden. Dabei wird eine Parameternachführung angewandt.

Dennoch besteht weiterhin ein Bedarf an Verfahren zur Erfassung von Landmarken, die ressourcenschonend, schnell und robust betrieben werden können. Es ist die Aufgabe der vorliegenden Erfindung, ein solches Verfahren und System bereitzustellen.

Diese Aufgabe wird erfindungsgemäß durch ein Verfahren mit den Merkmalen des Anspruchs 1 und ein System mit den Merkmalen des Anspruchs 13 gelöst. Vorteilhafte Ausgestaltungen und Weiterbildungen ergeben sich aus den abhängigen Ansprüchen.

Bei dem erfindungsgemäßen Verfahren zum Erfassen von Landmarken in einem Verkehrsumfeld einer mobilen Einheit werden durch einen Laserscanner Datensätze erfasst, wobei die Datensätze Datenpunkte umfassen. Es werden Datenpunkte einer bestimmten Anzahl von Datensätzen als Ausgangsdaten gespeichert und anhand der Ausgangsdaten werden mittels einer Segmentierung Segmente bestimmt, wobei den Segmenten jeweils Datenpunkte zugeordnet sind. Für jedes der bestimmten Segmente werden mittels einer Hauptkomponentenanalyse Landmarkenparameter des jeweiligen Segments bestimmt, wobei die Hauptkomponentenanalyse zum Bestimmen der Landmarkenparameter für jedes Segment eine Bestimmung einer Näherungsellipse für das Segment umfasst, wobei eine geometrische Form der Näherungsellipse eine Annäherung einer Vielzahl anderer geometrischer Formen erlaubt, wobei ein Richtungsparameter, ein Längenparameter, ein Breitenparameter, eine Startposition und eine Endposition der Näherungsellipse in einem Schritt gemeinsam bestimmt werden. Den Segmenten wird anhand der jeweils für sie bestimmten Landmarkenparameter eine Objektklasse zugeordnet. Es werden Landmarkenbeobachtungen bestimmt, wobei jeder Landmarkenbeobachtung Landmarkenparameter und eine Objektklasse zugeordnet sind, und die Landmarkenbeobachtungen werden ausgegeben.

Dadurch kann vorteilhafterweise eine besonders einfache und schnelle Erfassung von Landmarken durchgeführt werden. Insbesondere kann diese Erfassung im Rahmen einer Lokalisierung einer mobilen Einheit, etwa eines Fahrzeugs, erfolgen.

Das erfindungsgemäße Verfahren arbeitet insbesondere vektorbasiert, das heißt, es wird keine umfassende ortsaufgelöste Kartierung eines Raums vorgenommen, wie dies bei punkt- oder rasterbasierten Verfahren vorgesehen ist, sondern es werden einzelne Objekte detektiert parametrisiert und anhand dieser Parametrisierung gespeichert. Dadurch kann das Verfahren vorteilhafterweise schnell und mit vergleichsweise geringem Bedarf an Speicher und Rechenleistung betrieben werden, was insbesondere bei mobilen Einheiten, etwa in Fahrzeugen von Vorteil ist.

Der Begriff der "Position" umfasst im engeren Sinne die Koordinaten eines Punktes in einem Koordinatensystem, wobei ein Koordinatensystem relativ zu der mobilen Einheit oder ein globales Koordinatensystem betrachtet werden kann. In einem weiteren Sinne soll der Begriff "Position" allerdings auch Merkmale umfassen, die typischerweise unter den Begriff "Pose" fallen, insbesondere eine Ausrichtung der mobilen Einheit in eine bestimmte Richtung in dem Koordinatensystem. Im Folgenden ist zur Vereinfachung der Darstellung von der "Position" die Rede, wobei die weiteren Merkmale einer "Pose" nicht ausgeschlossen werden sollen.

Als "Landmarken" im Sinne der Erfindung werden unter anderem Orientierungspunkte und topographische Objekte verstanden, die wiedererkennbar und klassifizierbar sowie geeignet sind, einen räumlichen Bereich zu strukturieren beziehungsweise relativ zu denen eine Position im Sinne der Erfindung definiert werden kann. Klassifizierbar sind insbesondere solche Objekte, die als geometrische Formen abgebildet und parametrisiert werden können, etwa anhand ihrer Form, Position, Fläche, Länge und Breite. Insbesondere zählen zu den Landmarken Elemente der Verkehrsinfrastruktur, beispielsweise Fahrbahnmarkierungen, Verkehrszeichen, Beleuchtungsanlagen, Brücken oder andere Verkehrsbauwerke. Ferner zählen hierzu weitere Bauwerke, etwa Häuser, sowie Pflanzen, etwa Bäume, und landschaftliche Merkmale, etwa Bodenerhebungen. Landmarken sollen zudem wiedererkennbar sein, das heißt, ihr Aussehen und ihre weiteren Eigenschaften sollen während einer bestimmten Zeitdauer im Wesentlichen konstant bleiben, insbesondere so, dass eine Wiedererkennbarkeit anhand der Landmarken über einen ausreichend langen Zeitraum möglich ist, um gegebenenfalls Veränderungen mittels einer Aktualisierungsfunktionalität berücksichtigen zu können.

Insbesondere werden erfindungsgemäß semantisch interpretierbare Elemente der Straßeninfrastruktur als Landmarken erfasst. Diese können ferner nach ihrer Geometrie sowie gemäß den Möglichkeiten der Verarbeitung und Erfassung gruppiert werden. Insbesondere kann unterschieden werden zwischen punktbasierten Landmarken, etwa Pfählen, Pfosten und Säulen, die insbesondere mittels Lidar detektiert werden können, linienbasierten Landmarken, etwa gestrichelten Linien, Pfeilen und Stopplinien, die insbesondere mittels Lidar oder einer Kamera detektiert werden können, sowie polylinienbasierten Landmarken, etwa durchgezogenen Linien, die als Linienzüge repräsentiert werden können und für deren Detektion insbesondere eine Kamera verwendet werden kann.

Zur Charakterisierung einer Landmarkenbeobachtung wird ein Zustandsvektor erzeugt, wobei die in diesem Zustandsvektor hinterlegten Daten sich je nach dem Typ der Landmarke unterscheiden: Der Zustandsvektor $s^{PO}$ einer punktbasierten Landmarkenbeobachtung umfasst eine Position $p^{vrf}$ im Fahrzeugkoordinatensystem, eine Unsicherheit $\Sigma_p$ und eine absolute Position $p^{wgs}$ in einem globalen Koordinatensystem. Dabei werden die Punkte als Tripel $p = (x,y,z)$ angegeben. Ferner sind ein Durchmesser und eine Höhe definiert und es werden ein Zeitstempel für die Beobachtung sowie eine Identifikation des beobachtenden Sensors gespeichert. Ferner sind Felder für einen Wahrscheinlichkeitswert und eine Identifikation einer bestimmten Landmarke vorgesehen, die im weiteren Verlauf des Verfahrens für die weitere Verarbeitung verwendet werden. Für den Zustandsvektor $s^{DL}$ einer linienbasierten Landmarkenbeobachtung beziehungsweise den Zustandsvektor $s^{PL}$ einer polylinienbasierten Landmarkenbeobachtung sind zwei oder mehr Positionen

$$\left(p_1^{vrf}, ..., p_n^{vrf}\right)$$ vorgesehen sowie entsprechend viele Unsicherheiten $(\Sigma_{p_1}, ..., \Sigma_{p_n})$ und absoluten Positionen

$$\left(p_1^{wgs}, ..., p_n^{wgs}\right)$$ sowie modifizierte Parameter wie die Breite und Länge der (Poly-)Linie.

Alternativ oder zusätzlich können weitere Parametrisierungen einer Landmarkenbeobachtung, insbesondere für weitere Typen von Landmarken, vorgesehen sein.

Das "Verkehrsumfeld" der mobilen Einheit im Sinne der Erfindung umfasst ein räumliches Umfeld einer Position der mobilen Einheit, insbesondere bezüglich der für einen Verkehr in diesem Umfeld relevanten Eigenschaften. Insbesondere kann erfindungsgemäß das Umfeld eines Verkehrsteilnehmers, etwa auf einer Fahrbahn, betrachtet werden. Der räumliche Bereich wird dabei im Wesentlichen dadurch bestimmt, mit welcher Reichweite Daten im Umfeld erfasst werden können sowie in welchem Umfeld Landmarken zur Lokalisierung der mobilen Einheit genutzt werden können.

Eine "Beschreibung des Verkehrsumfeldes" umfasst insbesondere Informationen über Landmarken in dem Verkehrsumfeld. Dabei können Positionen und charakteristische Eigenschaften der Landmarken umfasst sein.

Die Erfassung der Datensätze im ersten Schritt des Verfahrens erfolgt auf an sich bekannte Art durch einen Laserscanner. Ein erfasster Datensatz umfasst insbesondere einen einzelnen Scan des Laserscanners, wobei durch Schwenken eines Lichtstrahls und Detektieren des reflektierten Lichts innerhalb eines bestimmten Erfassungsbereichs Parameter wie Abstände und Reflexionseigenschaften an Punkten in dem Verkehrsumfeld erfasst werden können. Die Datenpunkte entsprechen dabei einzelnen Messungen, insbesondere bei verschiedenen Winkeln relativ zum Laserscanner.

Bei einer Ausbildung des erfindungsgemäßen Verfahrens wird das Erfassen der Datensätze durch den Laserscanner periodisch durchgeführt. Ferner wird das Verfahren periodisch ausgeführt. Dadurch können vorteilhafterweise fortlaufend aktuelle Daten bereitgestellt werden, um die Landmarken in dem Verkehrsumfelds zu einem beliebigen Zeitpunkt möglichst genau erfassen zu können. Bei einer weiteren Verarbeitung der erfassten Landmarken kann eine fortlaufende Präzisierung und Nachverfolgung einer landmarkenbasierten Lokalisierung anhand der aktuellen Daten erfolgen.

In anderen Ausführungsformen kann die Erfassung auch in anderer Weise, etwa asynchron, erfolgen.

Ferner kann vorgesehen sein, dass Daten von weiteren Sensoren erfasst werden. Insbesondere können Daten erfasst werden, die eine Bewegung der mobilen Einheit, insbesondere eines Fahrzeugs, betreffen. Beispielsweise können eine Geschwindigkeit und eine Beschleunigung eines Fahrzeugs erfasst werden sowie eine Bewegungsrichtung und ein Lenkeinschlag.

Zudem kann vorgesehen sein, dass Daten von weiteren Einrichtungen erfasst werden, wobei insbesondere eine datentechnische Verbindung genutzt werden kann. Beispielsweise kann eine datentechnische Verbindung der mobilen Einheit zu weiteren Einheiten bestehen und von diesen erfasste Daten können genutzt werden. Dabei kann die datentechnische Verbindung auf verschiedene, an sich bekannte Weise hegestellt werden und es können Daten in ebenfalls bekannter Weise übertragen werden, wobei etwa ein Verfahren zum Abrufen bestimmter Daten von einer entfernten Einheit genutzt werden kann. Beispielsweise können von anderen Fahrzeugen erfasste Daten an ein Fahrzeug übertragen werden oder es können weitere Einrichtungen in analoger Weise genutzt werden.

Bei einer weiteren Ausbildung werden die Datenpunkte der erfassten Datensätze gefiltert, wobei lediglich Datenpunkte berücksichtigt werden, denen Positionen auf einer Fahrbahnoberfläche zugeordnet sind. Dabei wird vorteilhafterweise eine Klassifizierung der von dem Laserscanner erfassten Datenpunkte genutzt, die bei verfügbaren Laserscannern automatisch generiert wird.

Insbesondere können so die erfassten Rohdaten sinnvoll gefiltert werden. Beispielsweise können die erfassten Landmarken auf Merkmale der Fahrbahn beschränkt werden, etwa Fahrbahnmarkierungen, die insbesondere für die Lokalisierung von Fahrzeugen besonders wichtige Landmarken darstellen.

In einem zweiten Schritt werden die erfassten Daten zu Ausgangsdaten für die weitere Verarbeitung zusammengefasst. Insbesondere wird hier in einem Sonderfall ein einzelner Datensatz verwendet. Ferner kann eine Akkumulation durchgeführt werden. Die Eignung einer bestimmten Zahl von Datenpunkten und/oder Datensätzen zur weiteren Verarbeitung sowie das Erfordernis einer Akkumulation ergibt sich dabei auch aus den Eigenschaften der erfassten Datensätze, etwa der Zahl der Datenpunkte eines einzelnen Datensatzes. Die Ausgangsdaten können dabei nach an sich bekannter Art in einem Ringspeicher gespeichert werden, wobei die jeweils zuletzt erfassten Daten gespeichert werden, während die ältesten vorhandenen Daten gelöscht werden. Auf diese Weise können die Daten eines bestimmten, unmittelbar zurückliegenden Zeitraums zusammen gespeichert werden.

In einem weiteren Schritt erfolgt eine Segmentierung auf Basis der Ausgangsdaten. Dabei werden potentiell zu einer Landmarke gehörige Datenpunkte zu "Segmenten" zusammengefasst. Für jede potentielle Landmarke wird also für die zugehörigen Datenpunkte eine Untermenge der Ausgangsdaten definiert.

Bei einer Weiterbildung wird die Segmentierung mittels eines *Euclidean Cluster Extraction Algorithm* durchgeführt, wobei Datenpunkte, deren Abstand zueinander geringer ist als ein vorbestimmter Schwellenwert, jeweils einem Segment zugeordnet werden. Dies erlaubt vorteilhafterweise eine einfache und schnelle Bestimmung der Segmente.

Alternativ oder zusätzlich dazu können andere Algorithmen verwendet werden, etwa ein *Random Sample* Consensus-Algorithmus (RANSAC), wobei verschiedene Segmentierungsverfahren implementiert werden können.

Mittels einer Hauptkomponentenanalyse (*principal component analysis,* PCA) erfolgt anschließend die Analyse der Segmente. Dabei werden für jedes Segment Parameter bestimmt und als "Landmarkenparameter" gespeichert. Die Landmarkenparameter sind insbesondere geeignet, das Segment möglichst umfassend zu definieren. Beispielsweise kann eine geometrische Form bestimmt werden, welche die Verteilung der Datenpunkte eines Segments beschreibt.

Bei dem erfindungsgemäßen Verfahren umfasst die Hauptkomponentenanalyse zum Bestimmen der Landmarkenparameter für jedes Segment eine Bestimmung einer Näherungsellipse für das Segment. Die geometrische Form der Näherungsellipse erlaubt dabei vorteilhafterweise, eine Vielzahl anderer geometrischer Formen einfach und mit hoher Genauigkeit anzunähern.

Dabei erlauben die Parameter der Näherungsellipse Rückschlüsse auf die tatsächlichen Abmessungen und Parameter der geometrischen Form. Insbesondere können Punkte und Linien besonders gut durch die Näherungsellipse approximiert werden. Ferner erlaubt die PCA eine besonders schnelle und robuste Analyse der Segmente. Die relevanten Parameter der Näherungsellipse werden in einem Schritt gemeinsam bestimmt, sodass die Zahl der Berechnungsschritte und der Rechenaufwand zur Erfassung der Landmarken gegenüber anderen bekannten Verfahren wesentlich verringert werden. Insbesondere können zwei- oder mehrdimensionale Daten leicht verarbeitet werden und es kann eine geeignete Parametrisierung bestimmt werden. Beispielsweise kann so besonders schnell und einfach bestimmt werden, welche Länge und Breite ein längliches Objekt, etwa eine Linie, aufweist.

Bei einer Ausbildung umfassen die Landmarkenparameter zumindest eine Relativposition relativ zum Laserscanner. Dadurch wird vorteilhafterweise eine Positionsbestimmung für das detektierte Objekt relativ zu einem Detektionskoordinatensystem vorgenommen, insbesondere relativ zu einem Fahrzeugkoordinatensystem.

Insbesondere kann diese Position zusammen mit den weiteren Landmarkenparametern im Rahmen der Hauptkomponentenanalyse bestimmt werden. Dabei können etwa kartesische Koordinaten verwendet werden oder es kann eine Position mittels Abstand und Winkel bestimmt werden. Der Ursprung des Koordinatensystems kann insbesondere bei der mobilen Einheit angenommen werden, sodass zunächst eine Positionsbestimmung relativ zu dieser erfolgt. In einem weiteren Schritt kann dann eine Transformation in ein anderes Koordinatensystem, insbesondere ein globales Koordinatensystem, erfolgen.

In einem weiteren Schritt werden anhand der Landmarkenparameter Objektklassen bestimmt. Dabei erfolgt eine Klassifizierung nach geometrischen Grundformen, die eine grundlegende Zuordnung der Segmente zu verschiedenen Landmarken erlauben.

Bei einer weiteren Ausbildung werden die Segmente anhand der ihnen zugeordneten Objektklassen als punktbasierte, linienbasierte oder polylinienbasierte Objekte klassifiziert. Dadurch können vorteilhafterweise verschiedene Landmarken, insbesondere Fahrbahnmarkierungen und/oder andere Verkehrszeichen wie Pfähle, gut erkannt und parametrisiert werden.

Punk-, linien- oder polylinienbasierte Landmarken erlauben dabei eine besonders zweckmäßige Klassifizierung von Landmarken, insbesondere von Fahrbahnmarkierungen. Die Klassifizierung erfolgt dabei je nach den zur vollständigen Charakterisierung einer Landmarke notwendigen Landmarkenparameter, insbesondere der Anzahl der zu bestimmenden Positionen, um den Verlauf einer Fahrbahnmarkierung zu erfassen.

Wie oben bereits beschrieben, können in Abhängigkeit von der Objektklasse verschiedene Parameter bestimmt und gespeichert werden. Es wird also eine besonders effiziente Datenverwaltung ermöglicht.

Gemäß einer Ausbildung umfassen die bestimmten Landmarkenparameter für Segmente der linienbasierten oder polylinienbasierten Objektklasse einen Längenparameter und einen Breitenparameter sowie zumindest eine Startposition und eine Endposition. Dadurch werden vorteilhafterweise die relevantesten Parameter zur Beschreibung dieser Klassen von Objekten sowie deren Varianzen zur weiteren Analyse bereitgestellt.

Bei einer weiteren Ausbildung wird anhand der Landmarkenparameter der Segmente eine Filterung durchgeführt. Dadurch werden vorteilhafterweise die als echte Landmarken infrage kommenden Segmente ausgewählt und die weiteren Berechnungen können auf diese beschränkt werden.

Zur Filterung können etwa Grenzwerte verwendet werden, um die Plausibilität zu prüfen, dass erkannte Objekte tatsächlichen Landmarken entsprechen, und um Artefakte der Detektion zu vermeiden. Dabei kann bei punktbasierten Landmarken eine obere und/oder untere Grenze für den erfassten Radius geprüft werden. Ferner können bei linienbasierten und polylinienbasierten Landmarken obere und/oder untere Grenzwerte für die erfasste Länge und/oder Breite verwendet werden.

Ferner können gesetzliche Vorschriften herangezogen werden, die bestimmte Abmessungen für bestimmte Landmarken der Verkehrsinfrastruktur, insbesondere Fahrbahnmarkierungen, vorsehen. Beispielsweise kann eine minimale und/oder maximale Breite und/oder Länge von Linien vorgegeben sein, die als potentielle Fahrbahnmarkierungen akzeptiert werden. Ferner können bestimmte Formen erkannt und ihre Plausibilität für die Erkennung als Landmarken beurteilt werden.

Optional kann zudem eine Vereinfachung polylinienbasierter Objekte mittels des Ramer-Douglas-Peucker-Algorithmus oder eines ähnlichen geeigneten Verfahrens vorgenommen werden.

Die anhand eines Datensatzes erfassten und bestimmten Informationen über einzelne Landmarken werden zu jeweils einer "Landmarkenbeobachtung" zusammengefasst. Auf diese Weise können die Daten strukturiert werden. Eine Landmarkenbeobachtung umfasst dabei erfindungsgemäß alle Informationen über eine bestimmte Sichtung einer bestimmten Landmarke innerhalb eines Satzes von Ausgangsdaten. Es kann also bei wiederholter Anwendung des Verfahrens eine Reihe von Landmarkenbeobachtungen für die gleiche reale Landmarke bestimmt werden, wenn die Landmarke mehrfach gesichtet wird, insbesondere auch durch mehrere Sensoren und Erfassungseinheiten. Insbesondere kann eines Zuordnung der Landmarkenbeobachtung zu der entsprechenden Landmarke erfolgen, etwa mittels einer Identifikationsnummer, beispielsweise um mehrere Landmarkenbeobachtungen der gleichen Landmarke miteinander vergleichen zu können.

Bei einer weiteren Ausbildung sind die Landmarkenbeobachtungen Elementen einer Straßeninfrastruktur zugeordnet. Dadurch können die Daten vorteilhafterweise so verarbeitet werden, dass eine Zuordnung der Landmarkenbeobachtungen zu bestimmten Landmarken vorgenommen werden kann.

Beispielsweise kann auf diese Weise auch eine Übereinstimmung mit Landmarken bestimmt werden, die mittels weiterer Datensätze erfasst wurden, und eine weitere Verarbeitung wird ermöglicht. Insbesondere kann anschließend eine Positionsbestimmung vorgenommen werden, wobei verschiedene Verfahren zur landmarkenbasierten Lokalisierung verwendet werden können.

Schließlich sieht das erfindungsgemäße Verfahren eine Ausgabe der Landmarkenbeobachtungen vor. Dabei können die Daten beispielsweise an eine Einheit zur landmarkenbasierten Lokalisierung übertragen werden, es erfolgt also nicht notwendigerweise eine für einen Nutzer wahrnehmbare Ausgabe, wie etwa in Form einer Anzeige.

Die weitere Verarbeitung der Daten für eine landmarkenbasierte Lokalisierung kann auf verschiedene Weise erfolgen.

Bei einer Ausgestaltung des erfindungsgemäßen Verfahrens werden anhand der bestimmten Landmarkenbeobachtungen Umfeldmodelldaten bestimmt, wobei die Umfeldmodelldaten eine Beschreibung des Verkehrsumfeldes der mobilen Einheit umfassen. Mittels des Umfeldmodelldaten können so vorteilhafterweise Daten vorgehalten werden, die für eine landmarkenbasierte Lokalisierung der mobilen Einheit besonders relevant sind.

Die bestimmten Umfeldmodelldaten umfassen insbesondere Daten über Landmarken und den Landmarken zugeordnete Positionen. Dadurch können die Umfeldmodelldaten so bestimmt werden, dass sie eine umfassende Beschreibung der Landmarken in dem Verkehrsumfeld der mobilen Einheit repräsentieren und eine landmarkenbasierte Lokalisierung auf ihrer Basis ermöglichen.

Insbesondere umfassen die Umfeldmodelldaten Informationen über die Landmarken im Verkehrsumfeld der mobilen Einheit. Dabei können etwa den Landmarken zugeordnete Objektklassen bestimmt und gespeichert werden und die Landmarkenparameter mit Daten über die Positionen der Landmarken können umfasst sein. Die Anforderung, dass das erzeugte Umfeldmodell konsistent sein soll, betrifft dabei vor allem diejenigen Landmarken, für die es aus mehreren Sichtungen mehrere Landmarkenbeobachtungen gibt: Diese werden fusioniert und über einen bestimmten Zeitraum verfolgt, wobei sogenannte "Tracks" erzeugt werden. Die Tracks repräsentieren dabei zu einer Landmarke gehörige Beobachtungen und deren Nachverfolgung anhand der Positionen, die bei den Beobachtungen bestimmt wurden. Die Tracks der Umfeldmodelldaten dienen dazu, die zu einer Landmarke in dem Verkehrsumfeld erfassten Daten so zu verwalten, dass die Landmarken schließlich durch die Umfeldmodelldaten möglichst präzise repräsentiert werden.

Ferner können beim Bestimmen der Umfeldmodelldaten Abstandsberechnungen für Landmarkenbeobachtungen anhand ihrer Objektklasse und ihrer Landmarkenparameter durchgeführt werden, wobei die Landmarkenbeobachtungen anhand der Abstandswerte bestimmten Landmarken zugeordnet werden. Dadurch können vorteilhafterweise korrespondierende Landmarkenbeobachtungen sehr einfach und schnell ermittelt werden.

Es werden die Positionen von Landmarken, die durch die Tracks der Umfeldmodelldaten repräsentiert sind, anhand der Landmarkenparameter verschiedener Landmarkenbeobachtungen verglichen und es wird anhand von Abstandsberechnungen bestimmt, welche erfassten Landmarken zusammengehörig sind. Insbesondere werden die Abstandsberechnungen anhand der den Landmarken und Landmarkenbeobachtungen zugeordneten Objektklassen durchgeführt. Dadurch wird insbesondere berücksichtigt, dass unterschiedliche Formen von Landmarken unterschiedliche Verfahren zur Abstandberechnung erfordern. Beispielsweise kann punktbasierten Landmarken eine einzelne Position zugeordnet werden, wobei der geometrische Abstand solcher Landmarken zueinander anhand der jeweiligen Positionen eindeutig bestimmt werden kann. Die Berechnung wird für linien- und polylinienbasierte Landmarken dadurch verkompliziert, dass ihnen kein einzelner, eindeutiger Positionswert zuzuordnen ist, der mit einem anderen Positionswert verglichen werden könnte. Statt dessen sind mehrere Positionen für solche Landmarken charakteristisch, etwa Start- und Endpositionen sowie Zwischenpunkte.

Daher können verschiedene Abstandsmetriken für verschiedene Objektklassen vorgesehen sein. Insbesondere wird dabei für punktbasierte Landmarken eine Berechnung anhand der Mahalanobis-Distanz vorgenommen. Diese Gleichung wird für linienbasierte Landmarken, die jeweils eine Start- und eine Endposition aufweisen, so modifiziert, dass die vier Kombinationsmöglichkeiten für die Abstandsmessung gemeinsam berücksichtigt werden (Startposition 1 - Startposition 2; Endposition 1 - Startposition 2; Startposition 1 - Endposition 2; Endposition 1 - Endposition 2). Als Maß für den Abstand zwischen polylinienbasierten Landmarken (Linienzüge) wird eine von ihnen eingeschlossenen Fläche verwendet. Alternativ oder zusätzlich können andere geeignete Verfahren verwendet werden, durch die Abstandsmetriken bestimmt werden können.

Insbesondere werden die Daten für Landmarkenbeobachtungen für jede reale Landmarke ausgewertet, das heißt, für jede im Verkehrsumfeld detektierte Landmarke werden die Daten der dazugehörigen Landmarkenbeobachtungen gespeichert und die Daten verschiedener Landmarkenbeobachtungen können gesammelt verarbeitet werden.

Zur weiteren Bestimmung, ob eine Landmarkenbeobachtung einer realen Landmarke entspricht, können den registrierten Landmarken des Umfeldmodells Wahrscheinlichkeiten zugeordnet werden, die angeben, mit welcher Sicherheit hierbei eine reale Landmarke erfasst wurde. Durch einen Abgleich der Daten verschiedener Landmarkenbeobachtungen, die der gleichen Landmarke zugeordnet sind, kann der Wert der Wahrscheinlichkeit verändert werden.

Bei einer Weiterbildung umfassen die Umfeldmodelldaten Daten über Landmarken. Dabei werden anhand der Landmarkenbeobachtungen den Landmarken des Umfeldmodells Wahrscheinlichkeiten zugeordnet und die Wahrscheinlichkeiten werden anhand der Landmarkenbeobachtungen mittels eines *Sequential Probability Ratio Test* verändert. Die den Landmarken des Umfeldmodells, das heißt den Tracks, zugeordneten Wahrscheinlichkeiten werden also mittels eines *Sequential Probability Ratio Test* berechnet. Damit kann vorteilhafterweise ein statistischer Test angewandt werden, der eine besonders zuverlässige Bestimmung der Wahrscheinlichkeiten bei einer variablen Datenbasis zulässt.

Beispielsweise kann eine Wahrscheinlichkeit einer Landmarke erhöht werden, wenn sie durch eine weitere Landmarkenbeobachtung bestätigt wird, andernfalls wird die Wahrscheinlichkeit der Landmarke erniedrigt.

Eine Landmarke kann dann anhand eines Vergleichs der ihr zugeordneten Wahrscheinlichkeit mit einem Schwellenwert akzeptiert oder verworfen werden. Dadurch kann vorteilhafterweise in einem iterativen Verfahren getestet werden, ob eine Entscheidung für oder gegen die Annahme einer erfassten Landmarke als tatsächlich vorhanden angenommen werden kann. Dies erlaubt eine besonders einfache und zuverlässige Identifikation und Löschung von Fehldetektionen.

Die Daten der bestätigten Landmarken der Tracks werden weiter in den Umfeldmodelldaten verwendet, um eine Beschreibung des Verkehrsumfeldes zu repräsentieren. Dabei können die Umfeldmodelldaten etwa einer Karte des Verkehrsumfeldes der mobilen Einheit entsprechen. Insbesondere wird ein konsistentes Umfeldmodell erzeugt, das heißt, die Umfeldmodelldaten werden anhand der von mehreren Datensätzen erfassten Daten so erzeugt, dass die erfassten Datensätze konsistent miteinander sind.

Bei einer Ausbildung wird ferner eine Schätzposition der mobilen Einheit erfasst und anhand der erfassten Schätzposition werden Referenzkartendaten abgerufen, wobei die Referenzkartendaten Referenzpositionen von Landmarken umfassen. Anhand der Umfeldmodelldaten und der Referenzkartendaten wird mittels eines partikelfilterbasierten Verfahrens die Position der mobilen Einheit bestimmt. Damit kann vorteilhafterweise eine Lokalisierung anhand von Referenzkartendaten erfolgen.

Die Referenzkartendaten werden dabei in Abhängigkeit von einer geschätzten Position der mobilen Einheit abgerufen. Die Schätzposition wird nach an sich bekannte Verfahren erfasst, etwa mittels eines Satellitenpositionsbestimmungssystems wie des *Global Positioning System* (GPS). Der Abruf selbst erfolgt ebenfalls auf an sich bekannte Weise, insbesondere entweder von einer Speichereinrichtung der mobilen Einheit oder mittels einer datentechnischen Verbindung zu einer externen Einheit.

Die Erfassung der Schätzposition und das Abrufen der Referenzkartendaten können periodisch erfolgen. Dadurch kann vorteilhafterweise sichergestellt werden, dass ständig passende Referenzkartendaten vorliegen und für die Lokalisierung verwendet werden können. Beispielsweise kann der Abruf alle 10 Sekunden oder in einem anderen festgelegten Zeitintervall erfolgen. Ferner kann in ähnlicher Weise der Abruf anhand anderer Kriterien regelmäßig erfolgen, beispielsweise anhand eines Abstand von der Position des letzten Abrufs, sodass die Referenzkartendaten immer dann abgerufen werden, wenn sich die Position der mobilen Einheit um einen bestimmten Betrag geändert hat.

Bei dem partikelfilterbasierten Verfahren wird eine Vielzahl von statistisch verteilter Hypothesen über die tatsächliche Position der mobilen Einheit erzeugt und diese Hypothesen können als einzelne Partikel repräsentiert werden. Den Partikeln werden Wahrscheinlichkeiten dafür zugeordnet, dass sie der wahren Position der mobilen Einheit entsprechen und anhand der Wahrscheinlichkeiten wird die Hypothese bestimmt, die mit der besten Wahrscheinlichkeit als wahre Position der mobilen Einheit angenommen werden kann. Diese Position kann anschließend ausgegeben werden, beispielsweise durch Übertragen an eine andere Einheit wie etwa ein Fahrerassistenzsystem oder ein Navigationssystem.

Ferner kann alternativ oder zusätzlich die Positionsbestimmung anhand anderer Verfahren erfolgen, etwa mittels eines Kalman-Filters.

Das erfindungsgemäße System zum Erfassen von Landmarken in einem Verkehrsumfeld einer mobilen Einheit umfasst eine Erfassungseinheit, durch die mittels eines Laserscanners Datensätze erfassbar sind, wobei die Datensätze Datenpunkte umfassen, und eine Akkumulationseinheit, durch die Datenpunkte einer bestimmten Anzahl von Datensätzen als Ausgangsdaten speicherbar sind. Es umfasst ferner eine Segmentierungseinheit, durch die anhand der Ausgangsdaten mittels einer Segmentierung Segmente bestimmbar sind, wobei den Segmenten jeweils Datenpunkte zugeordnet sind. Zudem umfasst es eine Recheneinheit, durch die für jedes der bestimmten Segmente mittels einer Hauptkomponentenanalyse Landmarkenparameter des jeweiligen Segments bestimmbar sind, und den Segmenten anhand der jeweils für sie bestimmten Landmarkenparameter eine Objektklasse zuordenbar ist. Dabei sind durch die Recheneinheit Landmarkenbeobachtungen bestimmbar, wobei jeder Landmarkenbeobachtung Landmarkenparameter und eine Objektklasse zugeordnet sind. Ferner umfasst das System eine Ausgabeeinheit, durch welche die Landmarkenbeobachtungen ausgebbar sind.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Dabei kann die Erfassungseinheit ferner zumindest einen weiteren Sensortyp umfassen. Dadurch werden vorteilhafterweise Daten auf einander ergänzende Weisen erfasst und es wird durch mehrfache Detektion Redundanz erzeugt, die das Verfahren robuster macht. Verschiedene Sensortypen nutzen dabei insbesondere verschiedene Detektionsprinzipien.

Beispielsweise kann eine Kamera, ein Laserscanner, ein RADAR-Detektor und/oder ein anderer Sensor vorgesehen sein.

Bei einer Weiterbildung des Systems sind die Landmarkenbeobachtungen an eine Positionsbestimmungseinheit übertragbar. Dadurch können vorteilhafterweise die erfassten und bestimmten Daten für eine Lokalisierung verwendet werden. Insbesondere kann eine landmarkenbasierte Lokalisierung für die mobile Einheit, etwa ein Fahrzeug, ausgeführt werden.

Alternativ oder zusätzlich können die Landmarkenbeobachtungen ferner an andere Einrichtungen übertragen werden, etwa ein Fahrerassistenzsystem, das mittels der erfassten Landmarken Funktionen der Steuerung des Fahrzeugs unterstützen oder selbständig ausführen kann, oder entfernte Einrichtungen, etwa andere Fahrzeuge oder fahrzeugexterne Einrichtungen.

Die Erfindung wird nun anhand von Ausführungsbeispielen mit Bezug zu den Zeichnungen erläutert.

Figuren 1A und 1B     zeigen ein Ausführungsbeispiel des erfindungsgemäßen Systems,
Figur 2     zeigt ein Ausführungsbeispiel einer landmarkenbasierten Lokalisierung,
Figur 3     zeigt ein Ausführungsbeispiel einer Erfassung von Landmarken,
Figuren 4A und 4B     zeigen eine Erzeugung eines konsistenten Umfeldmodells,
Figur 5     zeigt ein Durchführen einer partikelfilterbasierten Lokalisierung und
Figur 6     zeigt ein Ausführungsbeispiel einer Updatefunktionalität.

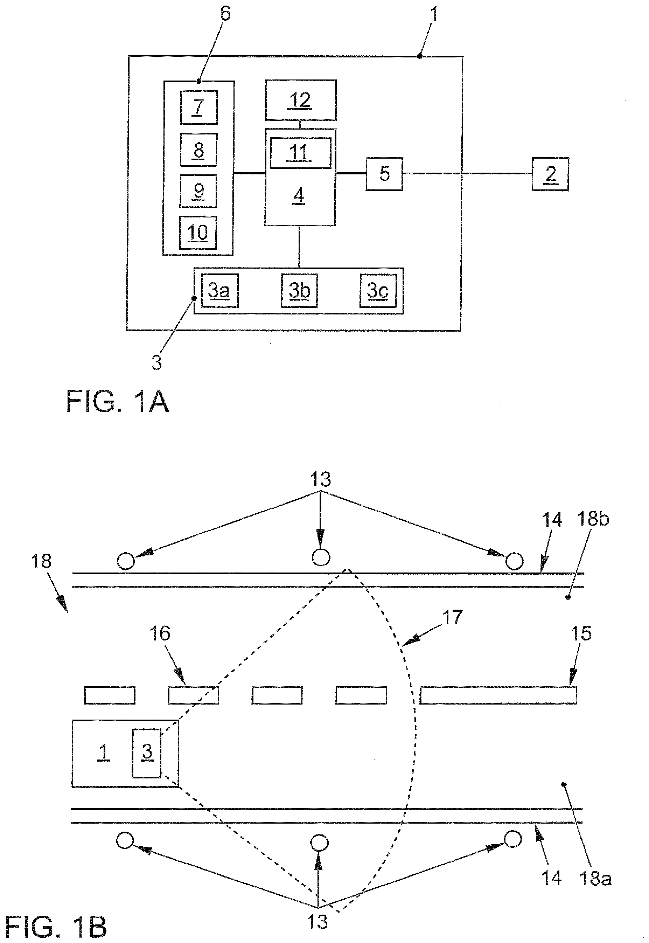

Mit Bezug zu den Figuren 1A und 1B wird ein Ausführungsbeispiel des erfindungsgemäßen Systems beschrieben.

In dem Ausführungsbeispiel ist als mobile Einheit 1 ein Fahrzeug 1 vorgesehen.

Das Fahrzeug 1 umfasst eine Erfassungseinheit 3, die wiederum einen Laserscanner 3a, eine Kamera 3b und einen GPS-Sensor 3c umfasst. Die Erfassungseinheit 3 ist mit einer Steuereinheit 4 gekoppelt. Ferner sind mit der Steuereinheit 3 gekoppelt: Eine Recheneinheit 6, ein Fahrerassistenzsystem 12 und eine Schnittstelle 5. Die Recheneinheit 6 umfasst eine Akkumulationseinheit 7, eine Segmentierungseinheit 8, eine Landmarkenerkennungseinheit 9 und eine Trackingeinheit 10. Die Steuereinheit umfasst ferner eine Ausgabeeinheit 11.

Die Schnittstelle 5 ist in dem Ausführungsbeispiel datentechnisch verbunden mit einem externen Server 2. Die datentechnische Verbindung wird durch die Schnittstelle 5 auf an sich bekannte Weise hergestellt und erfolgt in dem Ausführungsbeispiel drahtlos über das Internet. Dabei wird die Verbindung über ein Telefonnetzwerk hergestellt. In weiteren Ausführungsbeispielen wird die Verbindung auf andere Weise hergestellt, etwa mittelbar über ein mit dem Internet verbundenes Mobiltelefon, das selbst eine Verbindung zu dem externen Server 2 herstellen kann.

Die Erfassungseinheit 3 kann in weiteren Ausführungsbeispielen alternativ oder zusätzlich auch weitere Sensoren umfassen, die insbesondere andere Detektionsprinzipien nutzen. Beispielsweise können Lidar-, Radar- oder Ultraschallsensoren, Kameras im Bereich des sichtbaren Lichts oder Infrarotkameras sowie *Time-of-Flight-* oder Stereo-Kameras vorgesehen sein.

Der in dem Ausführungsbeispiel vorgesehene GPS-Sensor 3c ist nach an sich bekannter Weise gebildet und ermöglicht das Erfassen einer Position mittels eines Navigationssatellitensystems wie etwa des *Global Positioning System* (GPS). Alternativ oder zusätzlich können andere Positionierungssysteme verwendet werden, um eine Positionsbestimmung des Fahrzeugs 1 vorzunehmen.

Ferner ist in dem Ausführungsbeispiel vorgesehen, dass Daten von weiteren Sensoren des Fahrzeugs 1 erfasst werden. Dabei werden Daten erfasst, welche die Bewegung und Führung des Fahrzeugs 1 betreffen. Insbesondere werden die Geschwindigkeit und Beschleunigung erfasst sowie die Bewegungsrichtung und der Lenkeinschlag.

Das Fahrerassistenzsystem 12 ist eine Einrichtung des Fahrzeugs 1, welche den Fahrer beim Führen des Fahrzeugs 1 unterstützt. Das Fahrerassistenzsystem 12 in dem Ausführungsbeispiel kann als reines Informationssystem agieren, welches den Fahrer unterstützt, es kann jedoch auch voll- oder teilautomatisch die Fortbewegung des Fahrzeugs 1 beeinflussen, wobei in Steuerungsfunktionen eingegriffen wird.

Ohne das Fahrerassistenzsystem 12 beeinflusst der Fahrer direkt die Bewegung des Fahrzeugs 1. Es werden allenfalls Signale oder Bewegungen von vom Fahrer betätigten Bedienelementen, wie der Pedalerie, dem Schaltknüppel oder dem Lenkrad, an entsprechende Einrichtungen des Fahrzeugs 1 übertragen, welche die Fortbewegung des Fahrzeugs 1 beeinflussen.

Eine derartige Fortbewegung des Fahrzeugs 1 entspricht dem geringsten Grad der Automatisierung. Bei einem höheren Grad der Automatisierung wird zum Teil automatisch in Einrichtungen eingegriffen, welche der Fortbewegung des Fahrzeugs 1 dienen. Beispielsweise wird in die Lenkung des Fahrzeugs 1 oder die Beschleunigung in positiver oder negativer Richtung eingegriffen. Bei einem noch höheren Grad der Automatisierung wird soweit in Einrichtungen des Fahrzeugs 1 eingegriffen, dass bestimmte Fortbewegungsarten des Fahrzeugs 1, zum Beispiel eine Geradeausfahrt, automatisch ausgeführt werden können. Beim höchsten Grad der Automatisierung kann eine vorgegebene Route im Wesentlichen automatisch gefahren werden.

Dabei wird zum Betrieb des in dem Ausführungsbeispiel vorgesehenen Fahrerassistenzsystems 12 eine möglichst genaue Kenntnis der Position des Fahrzeugs 1 vorausgesetzt. Insbesondere wird die Kenntnis einer genauen Position auf der Fahrbahn benötigt, um beispielsweise eine Führung des Fahrzeugs 1 in Querrichtung und/oder Längsrichtung zu erlauben und etwa eine bestimmte Fahrspur oder Trajektorie automatisiert befahren zu können.

In Figur 1B sind einige Elemente eines typischen Verkehrsumfeldes des Fahrzeugs 1 dargestellt. Die Zeichnungen sind selbstverständlich als prinzipielle Skizzen zu verstehen, bei denen den verwendeten Maßstäben und Größenverhältnissen keine Bedeutung zukommt.

Als Verkehrsumfeld wird dabei das räumliche Umfeld der Position des Fahrzeugs 1 verstanden, vor allem die für den Verkehr in diesem Umfeld relevanten Eigenschaften. Das Verkehrsumfeld kann daher beispielsweise andere Verkehrsteilnehmer in der Umgebung des Fahrzeugs 1 umfassen (in Figur 1B wurden diese zur Vereinfachung nicht dargestellt), ferner können Fahrbahnmarkierungen und Verkehrszeichen, Infrastruktureinrichtungen und andere Merkmale umfasst sein, beispielsweise Bauwerke, Vegetation oder topographische Besonderheiten in dem Umfeld. Der räumliche Bereich wird dabei im Wesentlichen dadurch bestimmt, mit welcher Reichweite Daten im Umfeld erfasst werden können sowie in welchem Umfeld Landmarken zur Lokalisierung genutzt werden können.

Das Fahrzeug 1 befindet sich auf einer Fahrspur 18a einer Fahrbahn 18, die ferner eine weiter Fahrspur 18b umfasst. Zwischen den Fahrspuren 18a, 18b verläuft eine Leitlinie 16, die mehrere Teillinien umfasst und an die sich eine Fahrstreifenbegrenzung 15 in Form einer durchgezogenen Linie anschließt.

Die Fahrbahn 18 ist ferner an den äußeren Rändern durch Fahrbahnbegrenzungen 14 begrenzt. Am Rand der Fahrbahn 18 sind ferner Leitpfosten 13 angeordnet.

Ferner ist ein Erfassungsbereich 17 der Erfassungseinheit 3 des Fahrzeugs 1 angedeutet. In dem Ausführungsbeispiel sind insbesondere der Laserscanner 3a und die Kamera 3b der Erfassungseinheit 3 des Fahrzeugs 1 so eingerichtet, dass sie in dem Erfassungsbereich 17 Daten über das Verkehrsumfeld des Fahrzeugs 1 erfassen. Dabei können verschiedene Sensoren der Erfassungseinheit 3 unterschiedliche Erfassungsbereiche aufweisen.

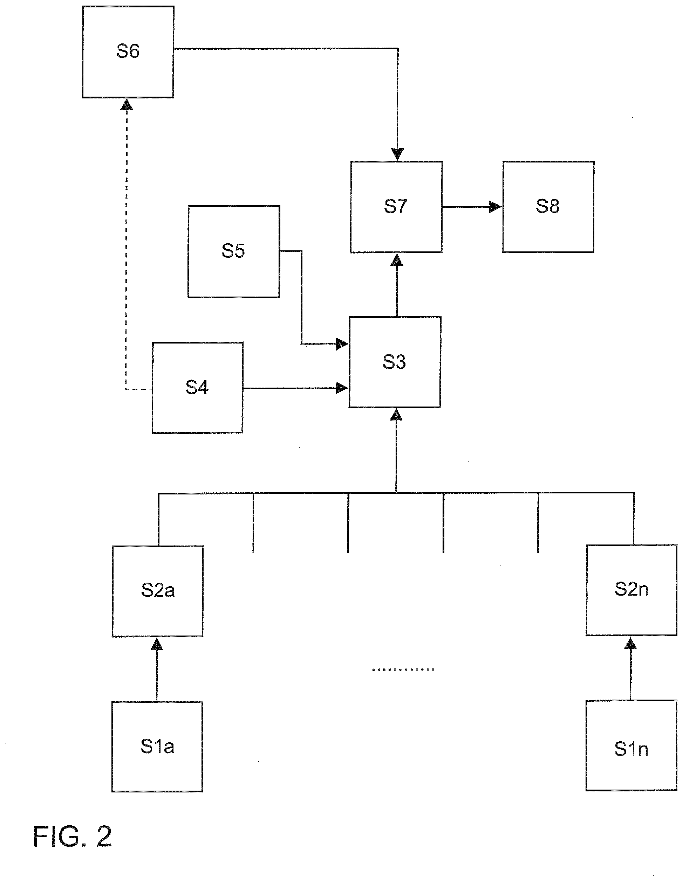

Mit Bezug zu Figur 2 wird ein Ausführungsbeispiel einer landmarkenbasierten Lokalisierung als Verfahren zum Bestimmen einer Position eines Fahrzeugs 1 erläutert. Dabei wird von dem mit Bezug zu den Figuren 1A und 1B erläuterten System ausgegangen.

In einem ersten Schritt S1a bis S1n werden Datensätze durch eine Anzahl von n Sensoren der Erfassungseinheit 3 des Fahrzeugs 1 erfasst, also etwa durch den Laserscanner 3a und die Kamera 3b. Dabei ist in Figur 2 jeweils ein separater Schritt S1a bis S1n für eine Anzahl von *n* Sensoren vorgesehen.

In weiteren Ausführungsbeispielen können alternativ oder zusätzlich Datensätze durch Sensoren anderer Fahrzeuge und/oder Einrichtungen erfasst werden. Es können dann Daten mittels einer datentechnischen Verbindung an das Fahrzeug 1 übertragen werden, insbesondere direkt von den Fahrzeugen und/oder Einrichtungen, welche die Daten erfasst haben, oder mittelbar über den Server 2. Die Verarbeitung kann in diesem Fall sowohl außerhalb des Fahrzeugs 1 erfolgen, etwa durch den Server 2 oder die weiteren Fahrzeuge und/oder Einrichtungen, oder die Datensätze können an das Fahrzeug 1 überragen und dort weiter verarbeitet werden.

Die erfassten Daten werden in einem weiteren Schritt S2a bis S2n ausgewertet, wobei Landmarken detektiert und Landmarkenbeobachtungen erzeugt werden. Auch hierfür ist in Figur 2 jeweils ein separater Schritt S2a bis S2n für alle n Sensoren vorgesehen.

Die "Landmarkenbeobachtungen" umfassen alle Informationen über eine bestimmte Sichtung einer bestimmten Landmarke innerhalb der im Schritt S1a bis S1n erfassten Daten. Den Landmarkenbeobachtungen sind jeweils Zeitpunkte zugeordnet, insbesondere ist dies der Zeitpunkt der Erfassung der entsprechenden Datensätze. Ferner umfassen die Landmarkenbeobachtungen Relativpositionen relativ zum Fahrzeug 1 sowie Parameter, welche den bei einer Sichtung detektierten Zustand der Landmarke charakterisieren, etwa die Ausdehnung der detektierten Landmarke.

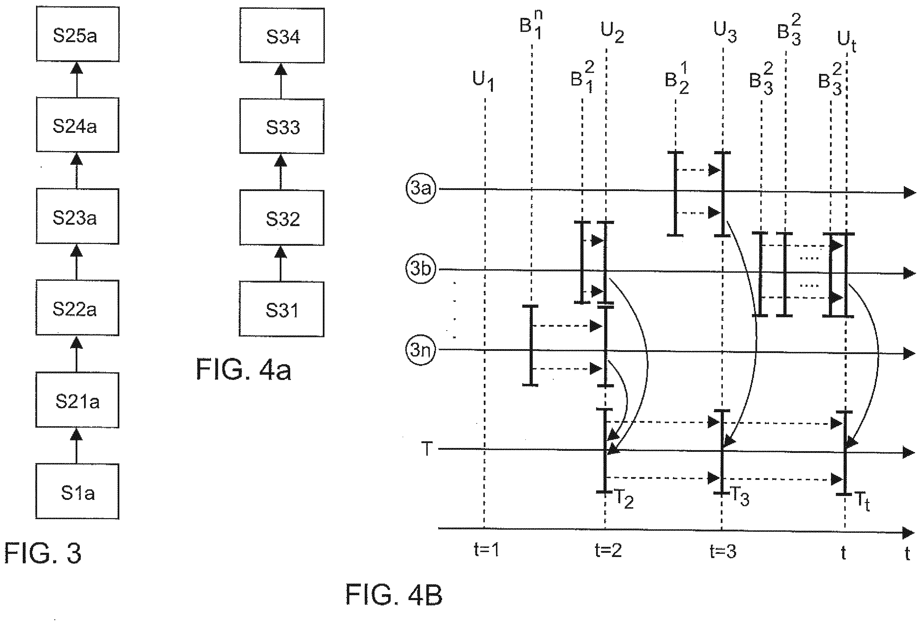

Der in den Schritten S1a bis S1n und S2a bis S2n ausgeführte Teil des Verfahren ist unten mit Bezug zu Figur 3 näher erläutert.

In einem weiteren Schritt S3 wird ein Tracking und eine Fusion der zuvor erfassten Daten durchgeführt. Dabei werden Daten eines konsistenten Umfeldmodells erzeugt, das heißt, die Informationen über das Verkehrsumfeld des Fahrzeugs 1 werden so zusammengeführt, dass die für eine landmarkenbasierte Lokalisierung relevanten Daten verfügbar sind. Insbesondere umfasst das Umfeldmodell Daten der Landmarkenbeobachtungen, etwa Daten über Landmarken im Verkehrsumfeld sowie die Positionen der Landmarken.

Die in Schritt S3 ausgeführte Erzeugung eines konsistenten Umfeldmodells ist unten mit Bezug zu Figur 4 näher erläutert.

In einem Schritt S4 wird eine Schätzposition des Fahrzeugs 1 erfasst. Dies wird im Ausführungsbeispiel mittels des GPS-Sensors 3c der Erfassungseinheit 3 ausgeführt, wobei in weiteren Ausführungsbeispielen alternativ oder zusätzlich andere Verfahren zur Bestimmung der Schätzposition verwendet werden können. Dabei wird davon ausgegangen, dass die Genauigkeit, mit der die Schätzposition des Fahrzeugs 1 bestimmt werden kann, für den Betrieb des Fahrerassistenzsystems 12 nicht ausreicht. Beispielsweise kann die Schätzposition bis auf 1 m genau bestimmt werden, wohingegen eine Führung des Fahrzeugs 1 entlang einer Trajektorie eine deutlich höhere Genauigkeit erfordert.

Die Schätzposition wird bei dem Ausführungsbeispiel in einem Schritt S6 mittels der Schnittstelle 5 an den externen Server 2 übertragen und dieser stellt im Sinne eines "elektronischen Horizonts" Referenzkartendaten bereit und überträgt sie an das Fahrzeug 1. Der Schritt S6 erfolgt insbesondere im Rahmen eines Abrufs der Referenzkartendaten von dem externen Server 3. Die Referenzkartendaten umfassen Daten zu Landmarken in dem Verkehrsumfeld des Fahrzeugs 1. Mithilfe der Schätzposition kann bestimmt werden, welche für das Verkehrsumfeld des Fahrzeug 1 relevanten Daten die Referenzkartendaten umfassen sollen.

Insbesondere sind die Referenzkartendaten und die Daten des Umfeldmodells so strukturiert, dass sie miteinander verglichen werden können, etwa indem Positionen von Landmarken in den jeweiligen Daten miteinander abgeglichen werden können.

Bei weiteren Ausführungsbeispielen ist vorgesehen, dass die Referenzkartendaten alternativ oder zusätzlich von einer Speichereinheit des Fahrzeugs 1 abgerufen werden. In diesem Fall ist eine datentechnische Verbindung zu dem externen Server 2 nicht erforderlich und das Verfahren kann zum Beispiel unter den Bedingungen einer lückenhaften Netzwerkanbindung betrieben werden.

In einem weiteren Schritt S5 wird eine Eigenbewegungsschätzung durchgeführt. Dabei werden insbesondere Daten von Fahrzeugsensoren verwendet, etwa für die Geschwindigkeit, Beschleunigung, Neigung, Richtung, Lenkeinschlag und weitere für die Bewegung des Fahrzeug 1 relevante Daten. Anhand dieser Daten kann bestimmt werden, wie sich das Fahrzeug 1 bewegt, wobei insbesondere mit höherer Genauigkeit bestimmt wird, an welcher Position sich das Fahrzeug 1 zu dem Zeitpunkt befindet, in dem ein Datensatz mittels der Erfassungseinheit 3 erfasst wird. Insbesondere kann damit die Änderung der Position des Fahrzeugs 1 seit dem letzten Erfassen einer Schätzposition bestimmt werden.

Die in den Schritten S4 und S5 bestimmte Schätzposition und Eigenbewegungsschätzung werden neben den Daten der Landmarkenbeobachtungen für die Erstellung des konsistenten Umfeldbildes durch Tracking und Fusion in Schritt S3 berücksichtigt.

Anhand des Umfeldbilds und der Referenzkartendaten wird in einem Schritt S7 eine partikelfilterbasierte Lokalisierung vorgenommen. Dabei werden anhand der Daten des Umfeldmodells und der Referenzkartendaten statistisch Hypothesen für die Position bestimmt, wobei die Hypothesen als "Partikel" repräsentiert werden. Es werden mittels eines Gewichtungsverfahrens anhand der Referenzkartendaten Wahrscheinlichkeiten der Hypothesen bestimmt und es wird die wahrscheinlichste Position bestimmt. Dies ist die durch das Verfahren bestimmte Position des Fahrzeugs 1.

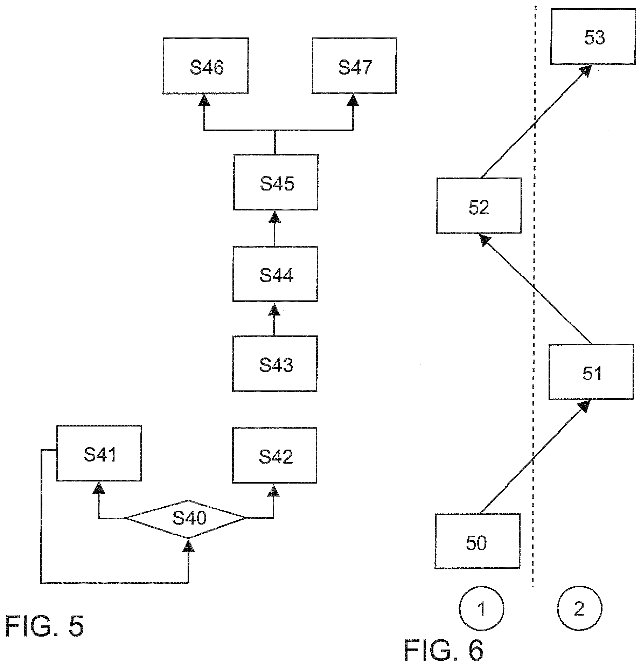

Weitere Einzelheiten zu dem in Schritt S7 verwendeten Verfahren sind unten mit Bezug zu Figur 5 näher erläutert.

In einem weiteren Schritt S8 erfolgt eine Ausgabe der Position, wobei in dem Ausführungsbeispiel die bestimmte Position mittels der Ausgabeeinheit 11 an das Fahrerassistenzsystem 12 übertragen wird. Alternativ oder zusätzlich kann die Position in diesem Schritt an verschiedene Einheiten des Fahrzeugs oder fahrzeugexterne Einheiten übertragen werden.

Mit Bezug zu Figur 3 wird ein Ausführungsbeispiel einer Erfassung von Landmarken erläutert. Dabei wird von dem mit Bezug zu den Figuren 1A und 1B erläuterten System ausgegangen. Insbesondere können die nachfolgend beschriebenen Schritte als Teil der oben mit Bezug zu Figur 2 erläuterten landmarkenbasierten Lokalisierung verstanden werden. Das hier für einen Sensor erläuterte Verfahren kann insbesondere auf die durch die Sensoren des Systems erfassten Daten jeweils angewandt werden.

In einem ersten Schritt S1a werden durch einen der Sensoren der Erfassungseinheit 3 des Fahrzeugs 1 Datensätze erfasst. Insbesondere wird hier der Sonderfall betrachtet, dass Daten durch den Laserscanner 3a erfasst werden, das Verfahren ist aber mit entsprechenden Modifikationen auf andere Sensoren übertragbar.

Die erfassten Datensätze umfassen Datenpunkte, wobei die einzelnen Datensätze jeweils die Datenpunkte umfasst, die bei einer Periode des Schwenkens des Laserstrahls des Laserscanners 3a erfasst werden. Insbesondere wird für jeden Datenpunkt ein Entfernungswert erfasst sowie Daten zur Reflexion der Oberfläche, von welcher der Laserstrahl zurückgeworfen wird. Die Erfassung der Daten erfolgt dabei periodisch durch regelmäßiges Schwenken des Laserstrahls über einen bestimmten Winkelbereich.

Optional kann in diesem ersten Schritt S1a eine Filterung vorgenommen werden. Insbesondere kann ein geeigneter Laserscanner 3a bereits eine integrierte Klassifizierung der Datenpunkte bereitstellen, die etwa Informationen darüber umfasst, ob bei einem Datenpunkt ein Oberflächenpunkt auf der Fahrbahn 18 detektiert wurde. Beispielsweise können alle anderen Datenpunkt außer denen auf der Fahrbahn vernachlässig werden, wenn Fahrbahnmarkierungen als Landmarken erfasst werden sollen.

In einem weiteren Schritt S21a wird eine Akkumulation durchgeführt. In einem Sonderfall können dabei die Datenpunkte eines einzelnen Datensatzes, hier also eines Scans des Laserscanners 3a, bereits eine ausreichende Datenbasis bilden, sodass eine Akkumulation der Datenpunkte eines Datensatzes vorgenommen wird.

In anderen Fällen können die Datenpunkte mehrerer erfasster Datensätze akkumuliert werden. Die akkumulierten Daten bilden die Ausgangsdaten, anhand derer anschließend die weitere Verarbeitung durchgeführt wird.

Dabei können die Datenpunkte insbesondere in einem Ringspeicher abgelegt werden, bei dem stets die neu erfassten Datenpunkte gespeichert werden, während gleichzeitig die älteren Datenpunkte gelöscht werden. Das heißt, es werden stets die aktuellsten Daten eines bestimmten Zeitraums oder eines bestimmten Datenvolumens bereitgestellt.

In einem weiteren Schritt S22a wird eine Segmentierung anhand der Ausgangsdaten vorgenommen. Dabei werden solche Datenpunkte jeweils einem Segment zugeordnet, die zusammengehörig erscheinen. Insbesondere kann dafür ein *Euclidean Cluster Extraction Algorithm* verwendet werden, bei dem solche Punkte einem gemeinsamen Segment zugeordnet werden, die weniger als einen bestimmten Maximalabstand zueinander aufweisen. Alternativ oder zusätzlich können andere Verfahren zur Segmentierung verwendet werden.

In einem anschließenden Schritt S23a werden die Segmente mittels einer Hauptkomponentenanalyse (*Principal Component Analysis,* PCA) analysiert und es wird für jedes der Segmente eine Näherungsellipse bestimmt. Dabei werden Landmarkenparameter für jedes der Segmente bestimmt, die die bestimmte Näherungsellipse eindeutig definieren. Die Landmarkenparameter umfassen einen Richtungsparameter, einen Längenparameter, einen Breitenparameter sowie eine Start- und eine Endposition. Ferner können die Varianzen für die jeweiligen Werte bestimmt werden. Dabei können die Landmarkenparameter anhand der PCA in einem Schritt bestimmt werden.

In einem Schritt S24a wird eine Klassifizierung der Segmente anhand der bestimmten Landmarkenparameter vorgenommen. Dabei sind insbesondere drei Klassen vorgesehen, nämlich punktbasierte, linienbasierte und polylinienbasierte Landmarken. Punktbasierte Landmarken sind durch eine bestimmte Ausdehnung und eine Position charakterisiert. Linienbasierte Landmarken weisen eine Start- und eine Endposition auf, während polylinienbasierte Landmarken zusätzliche Zwischenpositionen aufweisen.

Beispielsweise können durchgehende Linien als polylinienbasierte Landmarken erkannt werden, da für sie weder eine klarer Start- noch ein klarer Endpunkt detektiert wird. Insbesondere können solche Linien als durchgehende Linien charakterisiert werden, die sich über den Erfassungsbereich 17 der Erfassungseinheit 2 hinaus erstrecken und nicht vollständig von den Datenpunkten erfasst sind.

Für die Landmarkenparameter sind insbesondere Positionen definiert. Das heißt, für eine mittels PCA bestimmten Näherungsellipse ist zumindest eine Position bestimmt, die zunächst relativ zu der Erfassungseinheit 3 beziehungsweise zum Fahrzeug 1 angegeben wird.

Anhand der bestimmten Landmarkenparameter kann eine Filterung vorgenommen werden, die insbesondere eine Plausibilitätsprüfung umfasst. Dabei wird etwa geprüft, ob die Länge und Breite von detektierten linienbasierten Landmarken im Einklang mit gesetzlichen Vorschriften zu den Abmessungen von so geformten Fahrbahnmarkierungen steht. Insbesondere sind den Landmarkenbeobachtungen jeweils Elemente einer Straßeninfrastruktur zugeordnet, also etwa Teile oder ganze Elemente der in Figur 1B dargestellten Leitlinie 16, der Fahrbahnbegrenzung 14, der Fahrstreifenbegrenzung oder der Leitpfosten 13.

Ferner kann anhand bestimmter Varianzen bestimmt werden, ob eine Landmarke, etwa eine Fahrbahnmarkierung, mit ausreichender Sicherheit detektiert wurde. Es können weitere Filterschritte angewandt werden, um schlecht oder falsch erkannte Landmarken auszuschließen.

In einem Schritt S25a werden schließlich Landmarkenbeobachtungen erzeugt, das heißt, die zu den erfassten Datenpunkten bestimmten Informationen werden so zusammengefasst, dass sie alle für die weitere Verarbeitung relevanten Daten für eine landmarkenbasierte Lokalisierung umfassen. Die einzelnen Landmarkenbeobachtungen sind dabei jeweils einer Landmarke zugeordnet, das heißt, eine Landmarkenbeobachtung umfasst Daten, die bei einer Sichtung der Landmarke bestimmt wurden und die daher den detektierten Zustand einer Landmarke zum Zeitpunkt der Erfassung zugeordnet werden können.

Die erzeugten Landmarkenbeobachtungen geben insbesondere einen Zustandsvektor einer Landmarke an, wobei die Daten dafür sich je nach dem Typ der Landmarke unterscheiden: Der Zustandsvektor $s^{PO}$ einer punktbasierten Landmarkenbeobachtung wird angegeben als

$$s^{PO} = \begin{pmatrix} p^{vrf} \\ \Sigma_p \\ p^{wgs} \\ Durchmesser \\ H\ddot{o}he \\ Zeitstempel \\ Sensor^{ID} \\ Belief \\ ID \end{pmatrix},$$

der Zustandsvektor $s^{DL}$ einer linienbasierten Landmarkenbeobachtung als

$$s^{DL} = \begin{pmatrix} (p_1^{vrf}, p_2^{vrf}) \\ (\Sigma_{p_1}, \Sigma_{p_2}) \\ (p_1^{wgs}, p_2^{wgs}) \\ L\ddot{a}nge \\ Breite \\ Zeitstempel \\ Sensor^{ID} \\ Belief \\ ID \end{pmatrix}$$

und der Zustandsvektor $s^{PL}$ einer polylinienbasierten Landmarkenbeobachtung als

$$s^{PL} = \begin{pmatrix} (p_1^{vrf}, \ldots, p_n^{vrf}) \\ (\Sigma_{p_1}, \ldots, \Sigma_{p_n}) \\ (p_1^{wgs}, \ldots, p_n^{wgs}) \\ L\ddot{a}nge \\ Breite \\ Zeitstempel \\ Sensor^{ID} \\ Belief \\ ID \end{pmatrix}.$$

Dabei bezeichnen $p_n^{vrf}$ Koordinaten im Fahrzeugkoordinatensystem und $p_n^{wgs}$ Koordinaten im globalen Koordinatensystem, wobei jeder Punkt als Tripel p = (*x,y,z*) angegeben wird. Ferner werden Unsicherheiten $\Sigma_{p_n}$ angegeben. Der Zeitpunkt der Wahrnehmung ist im Feld "*Zeitstempel*" angegeben, ebenso die Identifikation des Sensors als "*Sensor$^{ID}$*" und die Identifikation der Landmarkenbeobachtung als "*ID*". Das Feld "*Belief*" wird bei der weiteren Verarbeitung der Landmarkenbeobachtungen für statistische Einträge einer Wahrscheinlichkeit benötigt. Die Charakterisierung der erfassten Landmarken wird durch die Felder "*Durchmesser*", "*Höhe*", "*Länge*" und "*Breite*" angegeben.

Alternativ oder zusätzlich können die Zustandsvektoren andere Elemente umfassen, beispielsweise eine Fläche oder einen Reflexionsgrad.

Die im Schritt S25a erzeugten Landmarkenbeobachtungen können ausgegeben und an ein Modul oder eine Einheit zur Weiterverarbeitung übertragen werden. Insbesondere kann damit der mit Bezug zu Figur 2 beschriebene Schritt S3 durchgeführt werden. Dabei können ferner Landmarkenbeobachtungen der n Sensoren zusammengefasst werden, etwa in einer bestimmten Datenstruktur, wobei insbesondere die oben beschriebenen Zustandsvektoren verwendet werden können.

Mit Bezug zu den Figuren 4A und 4B wird eine Erzeugung eines konsistenten Umfeldmodells erläutert. Dabei wird von dem mit Bezug zu den Figuren 1A und 1B erläuterten System ausgegangen. Insbesondere können die nachfolgend beschriebenen Schritte als Teil der oben mit Bezug zu Figur 2 erläuterten landmarkenbasierten Lokalisierung verstanden werden. Bei der landmarkenbasierten Lokalisierung wird insbesondere in einer ersten Schicht eine seonsor- und landmarkenspezifische Vorverarbeitung der Rohdaten durchgeführt und in einer zweiten Schicht wird mittels eines Tracking- und Fusionsverfahrens ein konsistentes Umfeldmodell aufgebaut. In einer dritten Schicht wird schließlich anhand des Umfeldmodells eine Karte aufgebaut.

Die beschriebenen Verfahrensschritte können insbesondere in einem Tracking- und Fusionsmodul zusammengefasst werden, wobei dies insbesondere durch die Trackingeinheit 10 ausgeführt wird. Dabei werden die erfassten Landmarkenbeobachtungen zu einem konsistenten Landmarkenumfeldmodell, im Folgenden als "Umfeldmodell" bezeichnet, fusioniert und stabilisiert. Die dabei zu lösenden Probleme beziehen sich insbesondere darauf, dass die Datensätze zu verschiedenen Zeitpunkten und daher während einer Bewegung des Fahrzeugs 1 auch an verschiedenen Positionen erfasst werden. Zudem sollen Fehldetektionen erkannt und entfernt werden.

Zunächst werden Landmarkenbeobachtungen empfangen, die jeweils bestimmten Zeitpunkten und Relativpositionen relativ zum Fahrzeug 1 zugeordnet sind. Dies erfolgt insbesondere anhand des oben mit Bezug zu Figur 3 beschriebenen Verfahrens. Dieser vorbereitende Schritt beschreibt eine sensorbasierte Schicht des Verfahrens.

Anhand der Schätzposition (siehe Figur 2, Schritt S4) und der Eigenbewegungsschätzung (siehe Figur 2, Schritt S5) werden den Landmarkenbeobachtungen geschätzte absolute Positionen zugeordnet. Es kann also während der fortlaufenden Bewegung des Fahrzeugs 1 ein Koordinatensystem nachgeführt werden und das Relativkoordinatensystem des Fahrzeugs 1 kann durch Transformation in ein globales Koordinatensystem überführt werden.

In einem ersten Schritt S31 wird eine zeitliche Synchronisierung durchgeführt. Diese ist in Figur 4B im Detail gezeigt. Parallel zu einer Zeitachse (t) sind Achsen für jeden Sensor 3a, 3b, 3n der Erfassungseinheit 3 dargestellt. Ferner ist eine Achse *(T)* für die sogenannten *Tracks* dargestellt, zu denen die Landmarkenbeobachtungen zu bestimmten Zeitpunkten zusammengeführt werden. Ein Track repräsentiert dabei die zu einer realen Landmarke erfassten, fusionierten und synchronisierten Daten.

Zu bestimmten Zeitpunkten $u_t$, die als gestrichelte Linien dargestellt sind, werden Daten über die Eigenbewegung des Fahrzeugs 1 empfangen. Dabei werden jeweils Mengen von Landmarkenbeobachtungen $B_t^n$ bereitgestellt, die insbesondere als ein Datenobjekt von einem der n Sensoren ausgegeben werden. Die Landmarkenbeobachtungen $B_t^n$ sind hier als fette senkrechte Linien dargestellt. Die Landmarkenbeobachtungen $B_t^n$ werden nicht synchron mit einander und mit den Daten zur Eigenbewegung des Fahrzeugs erfasst, sodass die Bewegung während der Zeitdifferenz zwischen zwei Zeitpunkten ausgeglichen werden muss, um die Daten vergleichen zu können. Dies ist durch waagrechte gestrichelte Pfeile dargestellt. Die Landmarkenbeobachtungen $B_t^n$ werden so lange gepuffert, bis Daten für einen neuen Bewegungsschritt vorliegen. Dann werden die Landmarkenbeobachtungen $B_t^n$ für jeden Sensor 3a, 3b, 3n für die Zeitpunkte $u_t$ synchronisiert. Durch geschwungene Pfeile nach unten wird verdeutlicht, dass diese synchronisierten Daten zu Tracks $T_t$ fusioniert werden. Die so erzeugten Tracks werden mit jedem Bewegungsschritt nachverfolgt. Damit liegen also die Landmarkenbeobachtungen der $B_{t-1}^n$ und $T_{t-1}$ im Koordinatensystem zum Zeitpunkt t des Bewegungszustandes $u_t$ vor.

In einem weiteren Schritt S32 werden Abstandsberechnungen für Landmarkenbeobachtungen und Landmarken der Tracks vorgenommen, um korrespondierende Landmarkenbeobachtungen der $B_t^n$ den Tracks $T_t$ zuzuordnen. Dabei können zunächst punkt-, linien- und polylinienbasierte Landmarken gruppiert werden, da nur sie untereinander korrespondieren können.

Mittels an sich bekannter Verfahren wird ein *Gating* ausgeführt, wobei nur Landmarkenbeobachtungen $B_t^n$ in einem bestimmten Umfeld der jeweiligen Tracks $T_t$ für die Assoziierung infrage kommen.

Es wird nun bestimmt, ob eine Landmarkenbeobachtung $B_t^n$ einem bestimmten Track $T_t$ zuzuordnen ist. Dies wird anhand der räumlichen Nähe zwischen beiden Punkten bestimmt. Um die Abstände zu berechnen, werden in dem Ausführungsbeispiel die folgenden Verfahren herangezogen:

Für punktbasierte Landmarken wird der Zustandsvektor $s^{PO}$ einer punktbasierten Landmarke betrachtet, bei dem die Position zur Zeit t als Punkt p = (x,y,z) im FahrzeugKoordinatensystem *vrf* angegeben wird. Es soll nun eine Distanzfunktion $d^{PO}$ zwischen einem Punkt $\vec{p_h}$ einer Landmarkenbeobachtung $b_h^{s^{PO}}$ und einem Punkt $\vec{p_r}$ eines Tracks $t_r^{s^{PO}}$ berechnet werden. Dabei ist ein Vektor zwischen $\vec{p_h}$ und $\vec{p_r}$ gegeben als $\vec{z}_{pr,ph}$. Es wird eine Berechnung der Mahalanobisdistanz durchgeführt anhand der Gleichung

$$d^{PO}\left(b_h^{s^{PO}}, t_r^{s^{PO}}\right) = \sqrt{\left(\vec{z}_{p_r,p_h}\right)^T \cdot S^{-1} \cdot \vec{z}_{p_r,p_h}},$$

wobei $S^{-1}$ die inverse Kovarianzmatrix der Track-Landmarke $t_r^{s^{PO}}$ bezeichnet.

Bei linienbasierten Landmarken umfassen die Landmarkenbeobachtungen Start- und Endpunkte. Die Bestimmung eines geometrischen Abstands ist mit typischen Methoden nicht so eindeutig möglich, da beispielsweise unter Vertauschung von Start- und Endpositionen deutlich andere Ergebnisse zu erwarten sind. Aus diesem Grund wird hier die Abstandsmetrik nach der Malahanobisgleichung modifiziert.

Betrachtet werden eine Landmarkenbeobachtung $b_i^{s^{DL}}$ mit Startpunkt $\vec{s_i}$ und Endpunkt $\vec{e_i}$ sowie eine Landmarke eines Tracks $t_o^{s^{DL}}$ mit Startpunkt $\vec{s_o}$ und Endpunkt $\vec{e_o}$. Es können nun Distanzen zwischen Start- und Endpunkten von $b_i^{s^{DL}}$ und $t_o^{s^{DL}}$ berechnet werden, wobei sich vier Kombinationsmöglichkeiten (Abstandsmessungen Startposition 1 - Startposition 2; Endposition 1 - Startposition 2; Startposition 1 - Endposition 2; Endposition 1 - Endposition 2) ergeben:

$$\kappa_{s_0,s_i} = \sqrt{(\vec{s_o} - \vec{s_i})^T \cdot S^{-1} \cdot (\vec{s_o} - \vec{s_i})},$$

$$\kappa_{e_0,e_i} = \sqrt{(\vec{e_o} - \vec{e_i})^T \cdot S^{-1} \cdot (\vec{e_o} - \vec{e})},$$

$$\kappa_{s_0,e_i} = \sqrt{(\vec{s_o} - \vec{e_i})^T \cdot S^{-1} \cdot (\vec{s_o} - \vec{e_i})},$$

$$\kappa_{e_0,s_i} = \sqrt{(\vec{e_o} - \vec{s_i})^T \cdot S^{-1} \cdot (\vec{e_o} - \vec{s_i})},$$

wobei mit $S^{-1}$ wieder die inverse Kovarianzmatrix der Track-Landmarke $t_o^{s^{DL}}$ bezeichnet wird.

In der Folge können Werte für ein quadratisches Mittel (QM) berechnet werden gemäß der Formel:

$$QM_{ss,ee} = \frac{\left(\kappa_{s_o,s_i}\right)^2 + \left(\kappa_{e_o,e_i}\right)^2}{2}$$

$$QM_{se,es} = \frac{\left(\kappa_{s_o,e_i}\right)^2 + \left(\kappa_{e_o,s_i}\right)^2}{2}$$

Abschließend kann die Distanzfunktion $d^{DL}$ berechnet werden nach:

$$d^{DL}\left(b_i^{s^{DL}}, t_o^{s^{DL}}\right) = \min(\sqrt{\overline{DQVS_{ss,ee}}}, \sqrt{\overline{DQVS_{se,es}}}).$$

Alternativ oder zusätzlich können weitere Verfahren zum Bestimmen der Abstandsmetrik verwendet werden.

Eine weitere Abstandsmetrik ist für polylinienbasierte Landmarken, das heißt Linienzüge, definiert. Dabei werden neben den Start- und Endpositionen ferner Zwischenpunkte berücksichtigt, um ein Abstandsmaß zu bestimmen. Insbesondere wird eine Fläche zwischen den Linienzügen bestimmt.

Es wird eine Landmarkenbeobachtung $b_k^{s^{PL}}$ betrachtet, deren Verlauf als zusammenhängende Punkteliste ($p_1, p_2, \ldots, p_i$) modelliert wird, und eine Landmarkenbeobachtung $t_l^{s^{PL}}$, mit der zusammenhängenden Punkteliste ($p_1, p_2, \ldots, p_q$). Um die zwischen den Polylinien eingeschlossene Fläche zu bestimmen, wird zunächst eine Projektion der Linienzüge aufeinander durchgeführt und die Linienzüge werden so abgeschnitten, dass nur diejenigen Abschnitte der Linienzüge weiter verarbeitet werden, die jeweils einem Abschnitt eines anderen Linienzugs gegenüberliegen.

Dazu können die Punkte entlang der beiden Linienzüge bestimmt werden, bei denen eine lotrechte Verbindung zu einem Endpunkt des jeweils anderen Linienzugs bestimmt werden kann. An diesen Stellen wird das Abschneiden durchgeführt. Dadurch wird beispielweise vermieden, dass Längenunterschiede der Linienzüge zu einer Überschätzung oder Unterschätzung des Abstandsmaßes führen.

Die von den Linienzügen eingeschlossene Fläche wird beispielsweise mittels der Gaußschen Trapezformel berechnet. Dazu wird das von den Linienzügen eingeschlossene Polygon zunächst anhand von Kreuzungen der Linienzüge, soweit vorhanden, in Subpolygone geteilt. Anschließend werden die Flächen der Subpolygone summiert und anhand der Länge der Abschnitte der Linienzüge normiert.

Als Kriterium für die Zuordnung der korrespondierenden Landmarkenbeobachtungen zu den Landmarken der Tracks wird die geringste Distanz als Kriterium verwendet, wobei das Greedy-Nearest-Neighbor-Verfahren angewandt werden kann. Alternativ oder zusätzlich können andere Verfahren, etwa die ungarische Methode, für die Zuordnung verwendet werden.

In einem weiteren Schritt S33 wird ein *Track Management* durchgeführt, wobei den Landmarken Wahrscheinlichkeiten zugeordnet und verändert werden, wobei ein *Sequential Probability Ratio Test* (SPRT) angewandt wird, um zu prüfen, ob eine detektierte Landmarke einer tatsächlichen Landmarke im Verkehrsumfeld des Fahrzeugs 1 entspricht.

Wird beispielsweise zu einem Zeitpunkt eine Landmarke beobachtet und zu einem anderen Zeitpunkt nicht mehr, so kann geprüft werden, ob eine reale Landmarke detektiert wurde oder ob eine Fehldetektion vorliegt. Wird andererseits eine Landmarke in mehreren aufeinander folgenden Landmarkenbeobachtungen detektiert, so wird dies als Bestätigung bewertet und der Wert der zugeordneten Wahrscheinlichkeit steigt.

In dem Ausführungsbeispiel wird den detektierten Landmarken zunächst die gleiche Wahrscheinlichkeit zugeordnet, die Wahrscheinlichkeit wird erhöht, wenn die Landmarke bestätigt wird, und erniedrigt, wenn die Landmarke nicht bestätigt wird. Wenn der Wert der Wahrscheinlichkeit einen bestimmten Schwellenwert über- oder unterschreitet wird die Hypothese, dass es sich um eine Detektion einer tatsächlichen Landmarke handelt, akzeptiert beziehungsweise verworfen. Dadurch wird mittels des SPRT als statistischem Test bestimmt, welche Landmarken weiterhin berücksichtigt werden sollen.

Dabei werden eine Nullhypothese $H_0$ ("Alle Beobachtungen stammen von einer falschen Detektion") und eine Alternativhypothese $H_1$ ("Alle Beobachtungen stammen von einer echten Detektion") überprüft. Es wird also geprüft, mit welcher Sicherheit anhand einer Landmarkenbeobachtung eine reale Landmarke detektiert wurde. Diese Prüfung erfolgt anhand des Likelihood-Quotienten LR:

$$\mathrm{LR} = \frac{p(D|\mathrm{H_1})}{p(D|\mathrm{H_0})} = \frac{p(D|\mathrm{H_1})}{1 - p(D|\mathrm{H_1})} = \frac{P_T}{P_F} = \frac{P_T}{1 - P_T},$$

wobei $P_T$ und $P_F$ die zu den Hypothesen ($H_0$/$H_1$ beziehungsweise *true*/*false*) gehörigen Wahrscheinlichkeiten und D die Daten bezeichnen.

Zur Erläuterung des Verfahrens werden einzelne zur Zeit t beobachtete Landmarken als $z_t$ bezeichnet. Ferner wird davon ausgegangen, dass bei dem bis zu diesem Punkt ausgeführten Verfahren bereits alle Landmarken der Messungen $B_t$, für die mit den Distanzfunktionen keine korrespondierende Landmarke bei den Tracks $T_t$ gefunden wurde, als potentiell neue Tracks in $T_t$ aufgenommen. Die Menge der Beobachtungen zum Zeitpunkt t wird $Z_t$ genannt. Die Beobachtung der i-ten Landmarke z zur Zeit t wird also als $z_t^i \in Z_t$ bezeichnet.

Den Beobachtungen wird zum Zeitpunkt des Dateneingangs eine Initialisierungswahrscheinlichkeit von $L_0$ zugewiesen. Dabei kann für die Initialisierung der gleiche Wert für alle neuen beobachteten Landmarken gewählt werden oder es kann ein sensorspezifischer Wert zugewiesen werden. Zur Vermeidung numerischer Instabilitäten kann der Log-Likelihood-Quotient $LLR^i$ für die i-te Landmarke verwendet werden. Es wird nun die Wahrscheinlichkeit, dass die i-te Landmarke von einer echten Detektion stammt (Alternativhypothese $H_1$), über die Detektionszeitpunkte hinweg anhand der zueinander korrespondierenden beobachteten Landmarken entwickelt:

$$LLR^i = \ln(L_0) + \ln\left(\sum_{t=1}^{t} \frac{p(z_t^i|\mathrm{H_1})}{1 - p(z_t^i|\mathrm{H_1})}\right)$$

Anhand diese Wertes wird geprüft, ob $LLR^i$ einen bestimmten Schwellenwert über- (A) oder unterschreitet (B):

$$\mathrm{B} = \ln\left(\frac{\beta}{1-\alpha}\right) \le LLR^i \le \ln\left(\frac{1-\beta}{\alpha}\right) = \mathrm{A}$$

$LLR^i$ entspricht dabei einer Wahrscheinlichkeit für die jeweils i-te Landmarke des Umfeldmodells; wobei, wobei diese Wahrscheinlichkeit als Konfidenzwert für den der jeweiligen Landmarke zugeordneten Track verstanden wird. Insbesondere kann dazu das Feld "*Belief*" des oben erläuterten Zustandsvektors genutzt werden. Dabei sind die Systemdesignparameter $\alpha$ und $\beta$ vorgegeben und beschreiben die Wahrscheinlichkeit der Bestätigung eines falschen Tracks beziehungsweise der Löschung eines echten Tracks. Ferner wird der Wert der Wahrscheinlichkeit einer Landmarke danach erhöht oder erniedrigt, ob sie durch weitere Landmarkenbeobachtungen bestätigt wird oder nicht. Bei Über- oder Unterschreiten wird das iterative Verfahren abgebrochen und die Landmarke bestätigt beziehungsweise verworfen:

$$\begin{cases} LLR^i(t) \ge \mathrm{A} & \text{Track bestätigen} \\ \mathrm{B} \le LLR^i(t) \le \mathrm{A} & \text{Test fortsetzen} \\ LLR^i(t) \le \mathrm{B} & \text{Track löschen} \end{cases}$$

In einem Schritt S34 werden schließlich Umfeldmodelldaten erzeugt, insbesondere erfolgt dies in einem "*Track Innovation*"-*Schritt*. Dabei wird die Menge der getrackten Landmarken in dem Umfeldmodell aktualisiert. Dieses umfasst Daten über die im Verkehrsumfeld des Fahrzeugs 1 erfassten Landmarken, insbesondere ihre Positionen. Insbesondere werden anhand der in den vorhergegangenen Verfahrensschritten bestimmten Daten Positionen, Unsicherheiten und Konfidenzwerte der Landmarkenbeobachtungen aktualisiert.

Anhand der bestätigten Tracks können die jeweils zugeordneten Landmarken in eine Karte aufgenommen werden. Eine solche Karte umfasst die bestimmten und optimierten Positionen für die Landmarken.

Es können verschiedene an sich bekannte Verfahren angewandt werden, um etwa die Positionen zu aktualisieren. Beispielsweise kann bei mehreren bestimmten Positionen einer Landmarke die zuletzt beobachtete Position übernommen werden, es kann eine exponentielle Glättung durchgeführt werden, es kann ein gleitender oder arithmetischer Mittelwert berechnet werden oder es kann - sofern die Landmarke eine Länge aufweist - eine längenbasiere Gewichtung für die Positionsmittlung verwendet werden.

Die Umfeldmodelldaten sind so strukturiert, dass sie mit den Referenzkartendaten abgeglichen werden können. Insbesondere können dabei beispielsweise die Positionen von bestimmten Landmarken verglichen werden.

Die Umfeldmodelldaten werden anschließend ausgegeben, das heißt zur weiteren Verarbeitung an ein weiteres Modul oder eine Einheit übertragen.

Mit Bezug zu Figur 5 wird eine partikelfilterbasierte Lokalisierung erläutert. Dabei wird von dem mit Bezug zu den Figuren 1A und 1B erläuterten System ausgegangen. Insbesondere können die nachfolgend beschriebenen Schritte als Teil der oben mit Bezug zu Figur 2 erläuterten landmarkenbasierten Lokalisierung verstanden werden.

Bei dem partikelbasierten Verfahren wird eine Partikelwolke erzeugt, wobei jeder Partikel eine Positionshypothese, das heißt für eine hypothetische Position des Fahrzeugs 1 steht. Die "Partikelwolke" bezeichnet also eine Menge von Partikeln. Damit repräsentiert jeder Partikel einen Partikelzustand, der als Hypothese für den Zustand des Fahrzeugs 1 verstanden wird. Es wird nun statistisch geprüft, bei welcher Hypothese, das heißt für welchen Partikel, die Landmarkenbeobachtungen am besten mit den Referenzkartendaten übereinstimmen. Ein Ausführungsbeispiel des Verfahrens wird nachfolgend im Detail beschrieben.

In einem ersten Schritt S40 wird überprüft, ob bereits eine Initialisierung durchgeführt wurde. Wird dieses verneint, so wird in einem weiteren Schritt S41 die Initialisierung vorgenommen. Bei der Initialisierung wird, wie oben für Schritt S4 beschrieben, die Schätzposition des Fahrzeugs 1 beispielsweise mittels des GPS-Sensors 3c zu einem bestimmten Zeitpunkt erfasst, wobei insbesondere von einer größeren Ungenauigkeit ausgegangen wird. Ferner können Daten über die Eigenbewegung des Fahrzeugs 1 berücksichtigt werden.

Durch Anwenden eines Bewegungsmodells in einem Schritt S42 wird eine Nachführung der Position mit der Eigenbewegung des Fahrzeugs 1 bestimmt, das heißt, die Veränderung der Position des Fahrzeugs 1 seit der letzten Erfassung der Schätzposition wird berücksichtigt. Für eine Initialisierung kann dabei auch eine gespeicherte Schätzposition, etwa der letzten Fahrt des Fahrzeugs 1, oder eine durch den Nutzer eingegebene Position verwendet werden. Es wird eine entsprechende Transformation der Partikelwolke vorgenommen, um die Verschiebung der Position des Fahrzeugs 1 durch seine Eigenbewegung auszugleichen. Auch hierbei ist von einer Ungenauigkeit der entsprechenden Sensoren und damit auch der resultierenden Ergebnisse auszugehen.

Insbesondere können dabei Unsicherheiten bei Sensoren zur Erfassung der Eigenposition (etwa mittels GPS) oder der Eigenbewegung (etwa mittels Odometrie) berücksichtigt werden.

In einem weiteren Schritt S43 wird ein Sensormodell angewandt. Dabei wird ein sensorbedingtes Messrauschen berücksichtigt und es wird die Wahrscheinlichkeit bestimmt, mit der die Landmarkenbeobachtungen unter Annahme des jeweiligen hypothetischen Partikelzustands erfasst wurden.

Aus dieser Wahrscheinlichkeit ergibt sich eine Gewichtung für die einzelnen Hypothesen und diese Gewichtung wird in einem Schritt S44 den Hypothesen zugeordnet. Dabei kann insbesondere eine Normalisierung der Wahrscheinlichkeiten vorgenommen werden.

In einem weiteren Schritt S45 wird zudem eine Glättung zur Stabilisierung der Ergebnisse vorgenommen, wobei starke Schwankungen der Wahrscheinlichkeiten für einzelne Partikel geglättet werden. Solche Schwankungen können insbesondere auftreten, wenn bei der Erfassung einer Landmarke in aufeinanderfolgenden Zeitpunkten größere Unterschiede auftreten, beispielsweise aufgrund von Messfehlern, verdeckten Landmarken oder beim Verschwinden der Landmarken aus dem Erfassungsbereich 17 der Erfassungseinheit 3.

Beispielsweise kann dabei die geglättete Gewichtung $\omega_{f,t}$ des Partikels $f$ im Zeitschritt t berechnet werden nach:

$$\omega_{f,t} = \alpha\omega_{f,t} + (1 - \alpha)\omega_{f,t-1}$$

Dabei wird ein Dämpfungsfaktor $\alpha$ empirisch gewählt und die Stärke der Dämpfung kann ferner durch geeignete Wahl des Zeitfensters zwischen Zeitschritten t und (t - 1) bestimmt werden.

In einem Schritt S46 wird die gemäß den vorangehenden Schritten korrigierte Position ausgegeben. Dabei wird insbesondere der Zustand des Partikels mit der maximalen zugeordneten Wahrscheinlichkeit berücksichtigt. Insbesondere wird bei der Ausgabe die bestimmte Position an ein Modul oder eine Einheit zur Weiterverarbeitung übertragen, insbesondere kann die Ausgabe an das Fahrerassistenzsystem 12 erfolgen.

Ferner kann in einem weiteren Schritt S47 ein *Resampling* durchgeführt werden. Dies kann notwendig werden, wenn durch Iteration des vorstehend beschriebenen Verfahrens die Anzahl der Partikel auf einen einzigen Partikel konvergiert. Dies ist insbesondere dadurch bedingt, dass die Streuung der Partikelwolke durch akkumulierte Messfehler in jedem Schritt zunimmt, während die Eigenbewegung des Fahrzeugs 1 wiederholt nachgeführt wird. Immer mehr Partikel entfernen sich immer weiter von der wahrscheinlichsten Position und ihnen wird eine entsprechend niedrige Wahrscheinlichkeit zugeordnet. Dies führt dazu, dass immer weniger Partikel mit besonders hoher Wahrscheinlichkeit berücksichtigt werden. Nachdem beim *Sampling* eine initiale Streuung der Partikel erzeugt wurde, werden bei den weiteren Iterationen des Verfahrens durch das *Resampling* sogenannte "Wiederherstellungspartikel" erzeugt, durch welche die Partikelwolke um neue Hypothesen ergänzt wird, um die statistische Wahl der wahrscheinlichsten Hypothese anhand einer ausreichen großen Datenbasis zu treffen.

Mit Bezug zu Figur 6 wird ein Ausführungsbeispiel einer Updatefunktionalität erläutert. Dabei wird von dem mit Bezug zu den Figuren 1A und 1B erläuterten System und dem mit Bezug zu Figur 2 erläuterten Verfahren ausgegangen.

In einem Schritt S50 wird zunächst die Schätzposition des Fahrzeugs 1 erfasst. Dies erfolgt beispielsweise durch den GPS-Sensor 3c, wie oben beschrieben. Die Schätzposition wird bei einem Abruf von Referenzkartendaten an den externen Server 2 übertragen.

Anhand der Schätzposition werden in einem Schritt S51 durch den externen Server 3 Referenzkartendaten erzeugt und an das Fahrzeug 1 übertragen. Dabei greift der Server 2 auf eine Referenzkartendatenbank zu und erzeugt die Referenzkartendaten so, dass sie alle für die landmarkenbasierte Lokalisierung des Fahrzeugs 1 relevanten Informationen umfassen, insbesondere Landmarken und ihre Positionen im Verkehrsumfeld des Fahrzeugs 1.

Durch das Fahrzeug 1 erfolgt nun eine landmarkenbasierte Lokalisierung anhand der Referenzkartendaten. Dabei können Unterschiede der von dem Fahrzeug 1 erfassten Landmarkenbeobachtungen und den gemäß der Referenzkartendaten zu erwartenden Landmarkenbeobachtungen erkannt werden. Beispielsweise können Landmarken verschwunden oder verändert sein oder es können neue Landmarken erfasst werden.

Es kann ein Verfahren angewandt werden, um sicherzustellen, dass es sich um tatsächliche Abweichungen der realen Landmarken von den Referenzkartendaten handelt. Insbesondere können dabei Artefakte der Erfassung von Landmarken durch das Fahrzeug 1 ausgeschlossen werden. Hierfür können insbesondere an sich bekannte Verfahren herangezogen werden.

In einem Schritt S52 werden durch das Fahrzeug 1 anhand der erkannten Abweichungen zwischen den Referenzkartendaten und den tatsächlich erfassten Landmarkenbeobachtungen Aktualisierungsdaten erzeugt. Diese umfassen Informationen, die dazu geeignet sind, dass in einem weiteren Schritt S53 durch den Server 2 eine Aktualisierung der Referenzkartendatenbank vorgenommen wird. In diesem Fall können bei einer Wiederholung des Verfahrens, etwa beim wiederholten Abruf von Referenzkartendaten bei einer bestimmten Schätzposition, nunmehr neue Referenzkartendaten bereitgestellt werden, welche die tatsächlichen Merkmale der Landmarken besser wiederspiegeln.

Auf diese Weise kann das Fahrzeug 1 zu einem neuen Vermessen der Landmarken in dem Verkehrsumfeld verwendet werden. Ferner kann der Server 2 Aktualisierungsdaten von mehreren Quellen, insbesondere mehreren Fahrzeugen, in der gleichen Weise empfangen und, etwa mittels statistischer Methoden, über eine Aktualisierung der Referenzkartendatenbank entscheiden. Ferner kann anhand der Aktualisierungsdaten bestimmt werden, ob in einem bestimmten Verkehrsumfeld eine neue Vermessung der Landmarken vorgenommen werden soll, etwa durch ein besonderes Vermessungsfahrzeug, das eine besonders präzise Erfassung der Daten für die Referenzkartendatenbank ermöglicht.

In einem weiteren Ausführungsbeispiel ist vorgesehen, dass die Referenzkartendaten alternativ oder zusätzlich von einer anderen Einrichtung als dem externen Server 2 bereitgestellt werden. Beispielsweise kann dies eine Einrichtung des Fahrzeugs 1 sein, die auch ohne eine datentechnische Verbindung zu dem Server 2 einen Abruf von Referenzkartendaten zur landmarkenbasierten Lokalisierung erlaubt. Das Verfahren kann hier in analoger Weise ausgeführt werden, wobei auch die Einrichtung des Fahrzeugs 1 auf eine Referenzkartendatenbank zugreift und diese mittels der Aktualisierungsdaten aktualisieren kann. In einem weiteren Ausführungsbeispiel sind sowohl der externe Server 2 als auch eine fahrzeugeigene Einrichtung zum Abrufen von Referenzkartendaten vorgesehen und die Aktualisierung der jeweiligen Referenzkartendatenbank der Einrichtung und des Servers 2 kann anhand einer Abstimmung zwischen den beiden erfolgen.

**Bezugszeichenliste**

| | |
|---|---|
| 1 | Mobile Einheit; Fahrzeug |
| 2 | Externer Server |
| 3 | Erfassungseinheit |
| 3a | Laserscanner |
| 3b | Kamera |
| 3c | GPS-Sensor |
| 3n | Weiterer Sensor |

| 4 | Steuereinheit |
|---|---|
| 5 | Schnittstelle |
| 6 | Recheneinheit |
| 7 | Akkumulationseinheit |
| 8 | Segmentierungseinheit |
| 9 | Landmarkenerkennungseinheit |
| 10 | Trackingeinheit |
| 11 | Ausgabeeinheit |
| 12 | Fahrerassistenzsystem |
| 13 | Landmarke; Leitpfosten |
| 14 | Landmarke; Fahrbahnbegrenzung |
| 15 | Landmarke; Fahrstreifenbegrenzung |
| 16 | Landmarke; Leitlinie |
| 17 | Erfassungsbereich |
| 18 | Fahrbahnoberfläche; Fahrbahn |
| 18a, | 18b Fahrspur |
| S1a, ..., S1n | Erfassung von Datensätzen |
| S2a, ..., S2n | Landmarkendetektion |
| S3 | Tracking und Fusion |
| S4 | Erfassung der Schätzposition |
| S5 | Eigenbewegungsschätzung |
| S6 | Abruf der Referenzkartendaten |
| S7 | Partikelfilterbasierte Lokalisierung |
| S8 | Ausgabe der Position |
| S21a | Akkumulation |
| S22a | Segmentierung |
| S23a | Hauptkomponentenanalyse |
| S24a | Klassifizierung |
| S25a | Erzeugen von Landmarkenbeobachtungen |
| S31 | Zeitliche Synchronisierung |
| S32 | Abstandsberechnungen |
| S33 | Zuordnen und Verändern von Wahrscheinlichkeiten |
| S34 | Erzeugen von Umfeldmodelldaten |
| S40 | Überprüfen der Initialisierung |
| S41 | Vornehmen der Initialisierung |
| S42 | Anwenden des Bewegungsmodells |
| S43 | Anwenden des Sensormodells |
| S44 | Zuordnen der Gewichtung |
| S45 | Glättung |
| S46 | Ausgabe der korrigierten Pose |
| S47 | Durchführen des *Resampling* |
| S50 | Erfassen der Schätzposition (Fahrzeug) |
| S51 | Erzeugen der Referenzkartendaten (Server) |
| S52 | Erzeugen von Aktualisierungsdaten (Fahrzeug) |
| S53 | Aktualisieren der Referenzkartendatenbank (Server) |

**Patentansprüche**

**1.** Verfahren zum Erfassen von Landmarken (13, 14, 15, 16) in einem Verkehrsumfeld einer mobilen Einheit (1), bei dem

durch einen Laserscanner (3a) Datensätze erfasst werden, wobei die Datensätze Datenpunkte umfassen;
Datenpunkte einer bestimmten Anzahl von Datensätzen als Ausgangsdaten gespeichert werden;
anhand der Ausgangsdaten mittels einer Segmentierung Segmente bestimmt werden, wobei den Segmenten jeweils Datenpunkte zugeordnet sind;
für jedes der bestimmten Segmente Landmarkenparameter des jeweiligen Segments bestimmt werden;
den Segmenten anhand der jeweils für sie bestimmten Landmarkenparameter eine Objektklasse zugeordnet wird;

Landmarkenbeobachtungen bestimmt werden, wobei jeder Landmarkenbeobachtung Landmarkenparameter und eine Objektklasse zugeordnet sind; und
die Landmarkenbeobachtungen ausgegeben werden,

**dadurch gekennzeichnet, dass**

die Landmarkenparameter für jedes der bestimmten Segmente mittels einer Hauptkomponentenanalyse des jeweiligen Segments bestimmt werden; wobei
die Hauptkomponentenanalyse zum Bestimmen der Landmarkenparameter für jedes Segment eine Bestimmung einer Näherungsellipse für das Segment umfasst,
wobei eine geometrische Form der Näherungsellipse eine Annäherung einer Vielzahl anderer geometrischer Formen erlaubt,
wobei ein Richtungsparameter, ein Längenparameter, ein Breitenparameter, eine Startposition und eine Endposition der Näherungsellipse in einem Schritt gemeinsam bestimmt werden.

2. Verfahren gemäß Anspruch 1,
   **dadurch gekennzeichnet, dass**
   das Erfassen der Datensätze durch den Laserscanner (3a) periodisch durchgeführt und das Verfahren periodisch ausgeführt wird.

3. Verfahren gemäß einem der vorhergehenden Ansprüche,
   **dadurch gekennzeichnet, dass**
   die Datenpunkte der erfassten Datensätze gefiltert werden, wobei lediglich Datenpunkte berücksichtigt werden, denen Positionen auf einer Fahrbahnoberfläche (18) zugeordnet sind.

4. Verfahren gemäß einem der vorhergehenden Ansprüche,
   **dadurch gekennzeichnet, dass**
   die Segmentierung mittels eines *Euclidean Cluster Extraction Algorithm* durchgeführt wird, wobei Datenpunkte, deren Abstand zueinander geringer ist als ein vorbestimmter Schwellenwert, jeweils einem Segment zugeordnet werden.

5. Verfahren einem der vorhergehenden Ansprüche,
   **dadurch gekennzeichnet, dass**
   die Landmarkenparameter zumindest eine Relativposition relativ zu dem Laserscanner (3a) umfassen.

6. Verfahren gemäß einem der vorhergehenden Ansprüche,
   **dadurch gekennzeichnet, dass**
   die Segmente anhand der ihnen zugeordneten Objektklassen als punktbasierte, linienbasierte oder polylinienbasierte Objekte klassifiziert werden.

7. Verfahren gemäß Anspruch 6,
   **dadurch gekennzeichnet, dass**
   die bestimmten Landmarkenparameter für Segmente der linienbasierten oder polylinienbasierten Objektklasse einen Längenparameter und einen Breitenparameter sowie zumindest eine Startposition und eine Endposition umfassen.

8. Verfahren gemäß einem der vorhergehenden Ansprüche,
   **dadurch gekennzeichnet, dass**
   anhand der Landmarkenparameter der Segmente eine Filterung durchgeführt wird.

9. Verfahren gemäß einem der vorhergehenden Ansprüche,
   **dadurch gekennzeichnet, dass**
   die Landmarkenbeobachtungen Elementen einer Straßeninfrastruktur zugeordnet sind.

10. Verfahren gemäß einem der vorhergehenden Ansprüche,
    **dadurch gekennzeichnet, dass**
    anhand der bestimmten Landmarkenbeobachtungen Umfeldmodelldaten bestimmt werden, wobei die Umfeldmodelldaten eine Beschreibung des Verkehrsumfeldes der mobilen Einheit (1) umfassen.

**11.** Verfahren gemäß Anspruch 10,
**dadurch gekennzeichnet, dass**
die Umfeldmodelldaten Daten über Landmarken (13, 14, 15, 16) umfassen, wobei anhand der Landmarkenbeobachtungen den Landmarken (13, 14, 15, 16) des Umfeldmodells Wahrscheinlichkeiten zugeordnet werden und die Wahrscheinlichkeiten anhand der Landmarkenbeobachtungen mittels eines *Sequential Probability Ratio Test* verändert werden.

**12.** Verfahren gemäß einem der Ansprüche 10 oder 11,
**dadurch gekennzeichnet, dass**

ferner eine Schätzposition der mobilen Einheit (1) erfasst wird und anhand der erfassten Schätzposition Referenzkartendaten abgerufen werden, wobei die Referenzkartendaten Referenzpositionen von Landmarken (13, 14, 15, 16) umfassen; und
anhand der Umfeldmodelldaten und der Referenzkartendaten mittels eines partikelfilterbasierten Verfahrens die Position der mobilen Einheit (1) bestimmt wird.

**13.** System zum Erfassen von Landmarken in einem Verkehrsumfeld einer mobilen Einheit mit

einer Erfassungseinheit (3), durch die mittels eines Laserscanners (3a) Datensätze erfassbar sind, wobei die Datensätze Datenpunkte umfassen;
einer Akkumulationseinheit (7), durch die Datenpunkte einer bestimmten Anzahl von Datensätzen als Ausgangsdaten speicherbar sind;
einer Segmentierungseinheit (8), durch die anhand der Ausgangsdaten mittels einer Segmentierung Segmente bestimmbar sind, wobei den Segmenten jeweils Datenpunkte zugeordnet sind;
einer Recheneinheit (6), durch die für jedes der bestimmten Segmente Landmarkenparameter des jeweiligen Segments bestimmbar sind, und den Segmenten anhand der jeweils für sie bestimmten Landmarkenparameter eine Objektklasse zuordenbar ist; wobei
durch die Recheneinheit (6) Landmarkenbeobachtungen bestimmbar sind, wobei jeder Landmarkenbeobachtung Landmarkenparameter und eine Objektklasse zugeordnet sind; und
einer Ausgabeeinheit (11), durch welche die Landmarkenbeobachtungen ausgebbar sind,

**dadurch gekennzeichnet, dass**

durch die Recheneinheit (6) die Landmarkenparameter für jedes der bestimmten Segmente mittels einer Hauptkomponentenanalyse des jeweiligen Segments bestimmbar sind; wobei
die Hauptkomponentenanalyse zum Bestimmen der Landmarkenparameter für jedes Segment eine Bestimmung einer Näherungsellipse für das Segment umfasst,
wobei eine geometrische Form der Näherungsellipse eine Annäherung einer Vielzahl anderer geometrischer Formen erlaubt,
wobei ein Richtungsparameter, ein Längenparameter, ein Breitenparameter, eine Startposition und eine Endposition der Näherungsellipse in einem Schritt gemeinsam bestimmbar sind.

**14.** System gemäß Anspruch 13,
**dadurch gekennzeichnet, dass**
die Landmarkenbeobachtungen an eine Positionsbestimmungseinheit übertragbar sind.

**Claims**

**1.** Method for detecting landmarks (13, 14, 15, 16) in a traffic environment of a mobile unit (1), in which

data sets are detected by a laser scanner (3a), wherein the data sets comprise data points;
data points of a defined number of data sets are stored as output data;
segments are determined using the output data by means of a segmentation, wherein respective data points are associated with the segments;
for each of the determined segments, landmark parameters of the respective segment are determined;
an object class is associated with the segments using the respective landmark parameters determined for it;
landmark observations are determined, wherein landmark parameters and an object class are associated with each landmark observation; and
the landmark observations are output,
**characterized in that**
the landmark parameters for each of the determined segments are determined by means of a principal component analysis of the respective segment; wherein
the principal component analysis for determining the landmark parameters for each segment includes a determination of an approximation ellipse for the segment,
wherein a geometric shape of the approximation ellipse allows an approximation of a plurality of other geometric shapes,
wherein a direction parameter, a length parameter, a width parameter, a start position, and an end position of the approximation ellipse are determined together in one step.

2. Method according to claim 1,
**characterized in that**
the detection of the data sets by the laser scanner (3a) is performed periodically, and the method is executed periodically.

3. Method according to any one of the preceding claims,
**characterized in that**
the data points of the detected data sets are filtered, wherein only data points with which positions on a roadway surface (18) are associated are considered.

4. Method according to any one of the preceding claims,
**characterized in that**
the segmentation is performed by means of a *Euclidean Cluster Extraction Algorithm,* wherein data points whose distance from one another is less than a predetermined threshold value are respectively associated with a segment.

5. Method according to any one of the preceding claims,
**characterized in that**
the landmark parameters include at least one relative position relative to the laser scanner (3a).

6. Method according to any one of the preceding claims,
**characterized in that**
the segments are classified as point-based, line-based, or polyline-based objects using the object classes associated with them.

7. Method according to claim 6,
**characterized in that**
the determined landmark parameters for segments of the line-based or polyline-based object class include a length parameter and a width parameter, as well as at least one start position and an end position.

8. Method according to any one of the preceding claims,
**characterized in that**
a filtering is performed using the landmark parameters of the segments.

9. Method according to any one of the preceding claims,
**characterized in that**
the landmark observations are associated with elements of a road infrastructure.

10. Method according to any one of the preceding claims,
**characterized in that**
environment model data are determined using the determined landmark observations, wherein the environment model data include a description of the traffic environment of the mobile unit (1).

11. Method according to claim 10,
**characterized in that**
the environment model data include data about landmarks (13, 14, 15, 16), wherein probabilities are associated with the landmarks (13, 14, 15, 16) of the environment model based on the landmark observations, and the probabilities are modified by means of a *Sequential Probability Ratio Test* using the landmark observations.

12. Method according to any one of claims 10 or 11,

   **characterized in that**
   an estimated position of the mobile unit (1) is also detected, and reference map data are retrieved using the detected estimated position, wherein the reference map data include reference positions of landmarks (13, 14, 15, 16); and
   the position of the mobile unit (1) is determined by means of a particle filter-based method, using the environment model data and the reference map data.

13. System for detecting landmarks in a traffic environment of a mobile unit with

   a detection unit (3) via which data sets can be detected by means of a laser scanner (3a), wherein the data sets comprise data points;
   an accumulation unit (7) via which data points of a defined number of data sets are storable as output data;
   a segmentation unit (8) via which segments can be determined using the output data, by means of a segmentation, wherein data points are respectively associated with the segments;
   a computing unit (6) via which landmark parameters of the respective segment can be determined for each of the determined segments, and an object class can be associated with the segments using the respective landmark parameters determined for it; wherein
   landmark observations can be determined by the computing unit (6), wherein landmark parameters and an object class are associated with each landmark observation; and
   an output unit (11) via which the landmark observations can be output,
   **characterized in that**
   the landmark parameters can be determined by the computing unit (6) for each of the determined segments, by means of a principal component analysis of the respective segment; wherein
   the principal component analysis for determining the landmark parameters for each segment includes a determination of an approximation ellipse for the segment,
   wherein a geometric shape of the approximation ellipse allows an approximation of a plurality of other geometric shapes,
   wherein a direction parameter, a length parameter, a width parameter, a start position, and an end position of the approximation ellipse can be determined together in one step.

14. System according to claim 13,
   **characterized in that**
   the landmark observations can be transmitted to a position determination unit.

**Revendications**

1. Procédé de détection de points de repère (13, 14, 15, 16) dans un environnement de circulation d'une unité mobile (1), dans lequel

   des ensembles de données sont acquis par un scanner laser (3a), les ensembles de données comprenant des points de données ;
   des points de données d'un nombre déterminé d'ensembles de données sont enregistrés en tant que données de sortie ;
   à l'aide des données de sortie, des segments sont déterminés au moyen d'une segmentation, des points de données étant respectivement associés aux segments ;
   des paramètres de points de repère du segment respectif sont déterminés pour chacun des segments déterminés ;
   une classe d'objets est associée aux segments à l'aide des paramètres de points de repère respectivement déterminés pour eux ;
   des observations de points de repère sont déterminées, des paramètres de points de repère et une classe d'objets étant associés à chaque observation de points de repère ; et
   les observations de points de repère sont sorties,
   **caractérisé en ce que**

les paramètres de points de repère pour chacun des segments déterminés sont déterminés au moyen d'une analyse en composantes principales du segment respectif ; dans lequel

l'analyse en composantes principales pour déterminer les paramètres de points de repère pour chaque segment comprend une détermination d'une ellipse d'approximation pour le segment,

dans lequel une forme géométrique de l'ellipse d'approximation permet une approximation d'une pluralité d'autres formes géométriques,

dans lequel un paramètre de direction, un paramètre de longueur, un paramètre de largeur, une position de début et une position de fin de l'ellipse d'approximation sont déterminés ensemble dans une étape.

2. Procédé selon la revendication 1,
   **caractérisé en ce que**
   l'acquisition des ensembles de données par le scanner laser (3a) est effectuée de manière périodique et le procédé est exécuté de manière périodique.

3. Procédé selon l'une quelconque des revendications précédentes,
   **caractérisé en ce que**
   les points de données des ensembles de données acquis sont filtrés, seuls les points de données auxquels sont associées des positions sur une surface de chaussée (18) étant pris en compte.

4. Procédé selon l'une quelconque des revendications précédentes,
   **caractérisé en ce que**
   la segmentation est effectuée au moyen d'un *Euclidean Cluster Extraction Algorithm* (algorithme euclidien de partitionnement), des points de données ayant un écart entre eux inférieur à une valeur seuil prédéterminée étant respectivement associés à un segment.

5. Procédé selon l'une quelconque des revendications précédentes,
   **caractérisé en ce que**
   les paramètres de points de repère comprennent au moins une position relative par rapport au scanner laser (3a).

6. Procédé selon l'une quelconque des revendications précédentes,
   **caractérisé en ce que**
   les segments sont classés, à l'aide des classes d'objets associées à ceux-ci, comme objets de type points, de type lignes ou de type polylignes.

7. Procédé selon la revendication 6,
   **caractérisé en ce que**
   les paramètres de points de repère déterminés pour des segments de la classe d'objets de type lignes ou polylignes comprennent un paramètre de longueur et un paramètre de largeur, ainsi qu'au moins une position de début et une position de fin.

8. Procédé selon l'une quelconque des revendications précédentes,
   **caractérisé en ce que**
   un filtrage est effectué à l'aide des paramètres de points de repère des segments.

9. Procédé selon l'une quelconque des revendications précédentes,
   **caractérisé en ce que**
   les observations de points de repère sont associées à des éléments d'une infrastructure routière.

10. Procédé selon l'une quelconque des revendications précédentes,
    **caractérisé en ce que**
    des données de modèle d'environnement sont déterminées à l'aide des observations de points de repère déterminées, les données de modèle d'environnement comprenant une description de l'environnement de circulation de l'unité mobile (1).

11. Procédé selon la revendication 10,
    **caractérisé en ce que**
    les données de modèle d'environnement comprennent des données relatives à des points de repère (13, 14, 15, 16), des probabilités étant associées aux points de repère (13, 14, 15, 16) du modèle d'environnement à l'aide des observations de points de repère et les probabilités étant modifiées au moyen d'un *Sequential Probability Ratio Test* (test du rapport de probabilité séquentiel) à l'aide des observations de points de repère.

12. Procédé selon l'une quelconque des revendications 10 ou 11,

    **caractérisé en ce que**
    une position estimée de l'unité mobile (1) est en outre détectée et des données cartographiques de référence sont appelées à l'aide de la position estimée détectée, les données cartographiques de référence comprenant des positions de référence de points de repère (13, 14, 15, 16) ; et
    la position de l'unité mobile (1) est déterminée à l'aide des données de modèle d'environnement et des données cartographiques de référence au moyen d'un procédé basé sur le filtrage de particules.

13. Système de détection de points de repère dans un environnement de circulation d'une unité mobile comprenant

    une unité de détection (3), par laquelle des ensembles de données peuvent être acquis au moyen d'un scanner laser (3a), les ensembles de données comprenant des points de données ;
    une unité d'accumulation (7), par laquelle des points de données d'un nombre déterminé d'ensembles de données peuvent être enregistrés en tant que données de sortie ;
    une unité de segmentation (8), par laquelle des segments peuvent être déterminés au moyen d'une segmentation à l'aide des données de sortie, des points de données étant associés respectivement aux segments ;
    une unité de calcul (6), par laquelle des paramètres de points de repère du segment respectif peuvent être déterminés pour chacun des segments déterminés et une classe d'objets peut être associée aux segments à l'aide des paramètres de points de repère respectivement déterminés pour ceux-ci ; dans lequel
    des observations de points de repère peuvent être déterminées par l'unité de calcul (6), des paramètres de points de repère et une classe d'objets étant associés à chaque observation de points de repère ; et
    une unité de sortie (11) par laquelle les observations de points de repère peuvent être sorties,
    **caractérisé en ce que**
    les paramètres de points de repère pour chacun des segments déterminés peuvent être déterminés par l'unité de calcul (6) au moyen d'une analyse en composantes principales du segment respectif ; dans lequel
    l'analyse en composantes principales pour déterminer les paramètres de points de repère pour chaque segment comprend une détermination d'une ellipse d'approximation pour le segment,
    dans lequel une forme géométrique de l'ellipse d'approximation permet une approximation d'une pluralité d'autres formes géométriques,
    dans lequel un paramètre de direction, un paramètre de longueur, un paramètre de largeur, une position de début et une position de fin de l'ellipse d'approximation peuvent être déterminés ensemble dans une étape.

14. Système selon la revendication 13,
    **caractérisé en ce que**
    les observations de points de repère peuvent être transmises à une unité de détermination de position.

FIG. 1A

FIG. 1B

FIG. 2

FIG. 4B

FIG. 4a

FIG. 3

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10148068 A1
- WO 9901843 A1
- DE 102004003850 A1
- DE 102007020791 A1

**In der Beschreibung aufgeführte Nicht-Patentliteratur**

- **K. FUERSTENBERG ; V. WILLHOEFT.** Object tracking and classification using laserscanners pedestrian recognition in urban environment. *2001 IEEE INTELLIGENT TRANSPORTATION SYSTEMS CONFERENCE PROCEEDINGS; Oakland (CA), USA,* 25. August 2001, 451-453